# EUROPEAN PATENT APPLICATION

(11) **EP 4 712 655 A1**
(43) Date of publication of application: **18.03.2026**
(21) Application number: 24803033.0
(22) Date of filing: 09.05.2024
(51) Int. Cl.: H04W 72/232

(54) **INFORMATION PROCESSING METHOD AND APPARATUS, TERMINAL AND NETWORK DEVICE**

(30) Priority: 11.05.2023 CN 202310533469
(71) Applicant: Datang Mobile Communications Equipment Co., Ltd., Beijing 100085 (CN)
(72) Inventor: WANG, Junwei, Beijing 100085 (CN); GAO, Xuejuan, Beijing 100085 (CN); ZHU, Min, Beijing 100085 (CN); SI, Qianqian, Beijing 100085 (CN)
(74) Representative: Studio Torta S.p.A.
(86) International application number: PCT/CN2024/091811
(87) International publication number: WO 2024/230753

(57) **Abstract**

The present disclosure provides an information processing method, apparatus, terminal, and network equipment, relating to the field of communication technology. The method includes: a terminal receiving downlink control signaling DCI sent by a network device; wherein the DCI schedules at least one downlink cell in a first cell group; the terminal determines one or more slot locations of a re-transmitted hybrid automatic repeat request response HARQ-ACK codebook based on a first modulation and coding scheme MCS indication field; wherein the first MCS indication field includes one or more MCS indication fields included in the DCI, and one MCS indication field corresponds to one downlink cell in the first cell group.

## Description

### CROSS-REFERENCE TO RELATED APPLICATION

This application claims a priority of the Chinese patent application No. 202310533469.0 filed on May 11, 2023 and titled "INFORMATION PROCESSING METHODS, INFORMATION PROCESSING APPARATUSES, TERMINALS, AND NETWORK DEVICES", which is incorporated herein by reference in its entirety.

### TECHNICAL FIELD

The present disclosure relates to the field of communication technologies, and in particular to information processing methods, information processing apparatuses, terminals, and network devices.

### BACKGROUND

In single carrier scheduling, Physical Downlink Shared Channel (PDSCH) Downlink Control Information (DCI) of a downlink cell supports the indication of Hybrid Automatic Repeat reQuest - Acknowledgment (HARQ-ACK) codebook re-transmission. For example, a HARQ-ACK codebook re-transmission indicator is introduced in the DCI. If the HARQ-ACK codebook re-transmission indicator is 1, it instructs the terminal to re-transmit the HARQ ACK codebook. Because the DCI for single-carrier scheduling contains one or more Modulation and Coding Scheme (MCS) indication fields of one scheduled cell, the terminal can determine the HARQ codebook slot location m to be re-transmitted based on the one or more MCS indication fields of the one scheduled cell in the DCI (that is, determine the HARQ-ACK codebook with slot number being m for re-transmission).

In multi-carrier scheduling, one single DCI can schedule PDSCHs of multiple downlink cells. For example, one single DCI can schedule the PDSCHs of up to three to four downlink cells. This DCI format is represented by DCI format 1_X, and DCI format 1_X supports the introduction of a HARQ-ACK codebook re-transmission indicator, which is used to indicate the slot location of the re-transmitted HARQ-ACK codebook. In DCI format 1_X, each scheduled cell has its own independent MCS indication field. This means that a DCI for multi-carrier scheduling can contain one or more MCS indication fields. However, when a DCI contains multiple MCS indication fields, there is yet no solution in the art concerning how the terminal determines one or more slot location(s) of the re-transmitted HARQ codebook.

### SUMMARY

The present disclosure provides information processing methods, information processing apparatuses, terminals and network devices, which solve the problem of how a terminal determines the re-transmitted HARQ codebook slot location when a DCI contains therein multiple MCS indication fields, a problem for which there is currently no solution.

In a first aspect, an embodiment of the present disclosure provides an information processing method, which includes: receiving, by a terminal, DCI sent by a network device, wherein the DCI schedules at least one downlink cell in a first cell group; determining, by the terminal, one or more slot locations of a re-transmitted HARQ-ACK codebook according to a first MCS indication field, wherein the first MCS indication field includes one or more MCS indication fields included in the DCI, and one MCS indication field corresponds to one downlink cell in the first cell group.

In some embodiments of the present disclosure, the first MCS indication field includes at least one of the following: an MCS indication field corresponding to a first scheduled cell, wherein the first scheduled cell is an earliest downlink cell scheduled by the DCI, or a downlink cell with the smallest cell index value among downlink cells scheduled by the DCI; an MCS indication field corresponding to a second scheduled cell, wherein the second scheduled cell is a latest downlink cell scheduled by the DCI, or a downlink cell with the largest cell index value among downlink cells scheduled by the DCI; an MCS indication field MCS indication fields corresponding to a first cell, wherein the first cell is a downlink cell with the largest cell index value in the first cell group; an MCS indication field corresponding to a second cell, wherein the second cell is a downlink cell with the smallest cell index value in the first cell group; an MCS indication field corresponding to one downlink cell indicated by higher-layer signaling; an MCS indication field corresponding to one downlink cell indicated by a first indication field included in the DCI.

In some embodiments of the present disclosure, the first MCS indication field includes at least one of the following: one or more MCS indication fields corresponding to third scheduled cells, wherein the third scheduled cells are downlink cells scheduled by the DCI; one or more MCS indication fields corresponding to third cells, wherein the third cells are downlink cells in the first cell group; one or more MCS indication fields corresponding to fourth cells, wherein the fourth cells are downlink cells in the first cell group that are not scheduled; one or more MCS indication fields corresponding to multiple downlink cells indicated by higher-layer signaling; one or more MCS indication fields corresponding to multiple downlink cells indicated by a first indication field included in the DCI.

In some embodiments of the present disclosure, the determining, by the terminal, the one or more slot locations of the re-transmitted HARQ-ACK codebook according to a first MCS indication field includes: determining, by the terminal, according to one MCS indication field in the first MCS indication field, one slot location of the re-transmitted HARQ-ACK codebook; or, determining, by the terminal, according to multiple MCS indication fields in the first MCS indication field, one slot location of the re-transmitted HARQ-ACK codebook; or, determining, by the terminal, according to multiple MCS indication fields in the first MCS indication field, multiple slot locations of the re-transmitted HARQ-ACK codebook, wherein one MCS indication field of the multiple MCS indication fields is used to determine one slot location of the multiple slot locations.

In some embodiments of the present disclosure, the determining, by the terminal, according to one MCS indication field in the first MCS indication field, the one slot location of the re-transmitted HARQ-ACK codebook includes: determining, by the terminal, according to an index value of one MCS indication field in the first MCS indication field, a value of a first parameter; and determining, by the terminal, according to the value of the first parameter and the slot location in which the terminal receives the DCI, the one slot location of the re-transmitted HARQ-ACK codebook.

In some embodiments of the present disclosure, the determining, by the terminal, according to multiple MCS indication fields in the first MCS indication field, the one slot location of the re-transmitted HARQ-ACK codebook includes: determining, by the terminal, according to respective index values of each MCS indication field in the first MCS indication field, values of respective first parameters corresponding to each MCS indication field; and determining, by the terminal, according to a sum of the values of the respective first parameters corresponding to each MCS indication field of the multiple MCS indication fields in the first MCS indication field and the slot location in which the terminal receives the DCI, the one slot location of the re-transmitted HARQ-ACK codebook.

In some embodiments of the present disclosure, the determining, by the terminal, according to multiple MCS indication fields in the first MCS indication field, the multiple slot locations of the re-transmitted HARQ-ACK codebook includes: determining, by the terminal, according to respective index values of each MCS indication field in the first MCS indication field, values of respective first parameters corresponding to each MCS indication field; and determining, by the terminal, according to the values of respective first parameters corresponding to each MCS indication field and the slot location in which the terminal receives the DCI, the multiple slot locations of the re-transmitted HARQ-ACK codebook.

In some embodiments of the present disclosure, respective index values of each MCS indication field in the first MCS indication field are the same.

In some embodiments of the present disclosure, the determining, by the terminal, the one or more slot locations of the re-transmitted HARQ-ACK codebook according to the first MCS indication field includes: determining, by the terminal, according to an index value of any one MCS indication field in the first MCS indication field, a value of the first parameter; and determining, by the terminal, according to the value of the first parameter and the slot location in which the terminal receives the DCI, one slot location of the re-transmitted HARQ-ACK codebook.

In some embodiments of the present disclosure, subsequent to the determining, by the terminal, the one or more slot locations of the re-transmitted HARQ-ACK codebook according to the first MCS indication field, the method further includes: splicing, by the terminal, the re-transmitted HARQ-ACK codebooks according to an increasing or decreasing order of the one or more slot locations; re-transmitting, by the terminal, the spliced HARQ-ACK codebook at a first slot location, wherein the first slot location is determined by a slot location in which the terminal receives the DCI and a value indicated by timing information included in the DCI.

In some embodiments of the present disclosure, subsequent to the receiving, by the terminal, the DCI sent by the network device, the method further includes: receiving, by the terminal, one or more PDSCHs from a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments of the present disclosure, prior to the receiving, by the terminal, the DCI sent by the network device, the method further includes: receiving, by the terminal, first configuration information sent by the network device, wherein the first configuration information includes at least one of the following: first indication information, which is used to indicate whether one or more MCS indication fields included in the DCI support triggering HARQ-ACK codebook re-transmission; second indication information, which is used to indicate whether one or more downlink cells scheduled by the DCI support performing PDSCH transmission when the HARQ-ACK codebook is re-transmitted.

In a second aspect, some embodiments of the present disclosure provide an information processing method, which includes: determining, by a network device, according to one or more slot locations of a re-transmitted HARQ-ACK codebook, a first MCS indication field; sending, by the network device, DCI to a terminal, wherein the DCI schedules at least one downlink cell in a first cell group, wherein the DCI is used to schedule at least one downlink cell in the first cell group, and the DCI comprises therein at least one MCS indication field, wherein the first MCS indication field comprises one or more MCS indication fields included in the DCI, and one MCS indication field corresponds to one downlink cell in the first cell group.

In some embodiments of the present disclosure, the first MCS indication field includes at least one of the following: an MCS indication field corresponding to a first scheduled cell, wherein the first scheduled cell is an earliest downlink cell scheduled by the DCI, or a downlink cell with the smallest cell index value among downlink cells scheduled by the DCI; an MCS indication field corresponding to a second scheduled cell, wherein the second scheduled cell is a latest downlink cell scheduled by the DCI, or a downlink cell with the largest cell index value among downlink cells scheduled by the DCI; an MCS indication field corresponding to a first cell, wherein the first cell is a downlink cell with the largest cell index value in the first cell group; an MCS indication field corresponding to a second cell, wherein the second cell is a downlink cell with the smallest cell index value in the first cell group; an MCS indication field corresponding to one downlink cell indicated by higher-layer signaling; an MCS indication field corresponding to one downlink cell indicated by a first indication field included in the DCI.

In some embodiments of the present disclosure, the first MCS indication field includes at least one of the following: one or more MCS indication fields corresponding to third scheduled cells, wherein the third scheduled cells are downlink cells scheduled by the DCI; one or more MCS indication fields corresponding to third cells, wherein the third cells are downlink cells in the first cell group; one or more MCS indication fields corresponding to fourth cells, wherein the fourth cells are downlink cells in the first cell group that are not scheduled; one or more MCS indication fields corresponding to multiple downlink cells indicated by higher-layer signaling; one or more MCS indication fields corresponding to multiple downlink cells indicated by a first indication field included in the DCI.

In some embodiments of the present disclosure, the determining, by the network device, according to one or more slot locations of the re-transmitted HARQ-ACK codebook, the first MCS indication field includes: determining, by the network device, according to one slot location of the re-transmitted HARQ-ACK codebook, one MCS indication field, and determining the one MCS indication field as the first MCS indication field; or, determining, by the network device, according to one slot location of the re-transmitted HARQ-ACK codebook, multiple MCS indication fields, and determining the multiple MCS indication fields as the first MCS indication field; or, determining, by the network device, according to multiple slot locations of the re-transmitted HARQ-ACK codebook, multiple MCS indication fields, and determining the multiple MCS indication fields as the first MCS indication field, wherein one MCS indication field of the multiple MCS indication fields is used to determine one slot location of the multiple slot locations.

In some embodiments of the present disclosure, the determining, by the network device, according to one slot location of the re-transmitted HARQ-ACK codebook, one MCS indication field, and determining the one MCS indication field as the first MCS indication field includes: determining, by the network device, according to the one slot location of the re-transmitted HARQ-ACK codebook and the slot location in which the terminal receives the DCI, a value of a first parameter; determining, by the network device, according to the value of the first parameter, an index value of one MCS indication field; and determining, by the network device, the one MCS indication field corresponding to the index value as the first MCS indication field.

In some embodiments of the present disclosure, the determining, by the network device, according to one slot location of the re-transmitted HARQ-ACK codebook, multiple MCS indication fields, and determining the multiple MCS indication fields as the first MCS indication field includes: determining, by the network device, according to the one slot location of the re-transmitted HARQ-ACK codebook and the slot location in which the terminal receives the DCI, a sum of the values of the respective first parameters corresponding to the multiple MCS indication fields; determining, by the network device, according to the sum of the values of the respective first parameters corresponding to the multiple MCS indication fields, respective index values of each MCS indication field in the multiple MCS indication fields; and determining, by the network device, the multiple MCS indication fields corresponding to respective index values as the first MCS indication field.

In some embodiments of the present disclosure, the determining, by the network device, according to multiple slot locations of the re-transmitted HARQ-ACK codebook, multiple MCS indication fields, and determining the multiple MCS indication fields as the first MCS indication field includes: determining, by the network device, according to the multiple slot locations of the re-transmitted HARQ-ACK codebook and the slot location in which the terminal receives the DCI, values of respective first parameters corresponding to each MCS indication field in the multiple MCS indication fields; determining, by the network device, according to the values of respective first parameters corresponding to each MCS indication field, respective index values of each MCS indication field; and determining, by the network device, the multiple MCS indication fields corresponding to respective index values as the first MCS indication field.

In some embodiments of the present disclosure, respective index values of each MCS indication field in the first MCS indication field are the same.

In some embodiments of the present disclosure, the determining, by the network device, according to one or more slot locations of a re-transmitted HARQ-ACK codebook, the first MCS indication field includes: determining, by the network device, according to one or more slot locations of a re-transmitted HARQ-ACK codebook and the slot location in which the terminal receives the DCI, the value of the first parameter; determining, by the network device, according to the value of the first parameter, a first index value; and determining, by the network device, one or more MCS indication fields as the first MCS indication field, and configuring an index value of each of the one or more MCS indication fields as the first index value.

In some embodiments of the present disclosure, subsequent to the sending, by the network device, the DCI to the terminal, the method further includes: receiving, by the network device, the HARQ-ACK codebook re-transmitted by the terminal at a first slot location, wherein the first slot location is determined by a slot location in which the terminal receives the DCI and a value indicated by timing information included in the DCI.

In some embodiments of the present disclosure, subsequent to the sending, by the network device, the DCI to the terminal, the method further includes: sending, by the network device, one or more PDSCHs to a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments of the present disclosure, prior to the sending, by the network device, the DCI to the terminal, the method further includes: sending, by the network device, first configuration information to the terminal, wherein the first configuration information includes at least one of the following: first indication information, which is used to indicate whether one or more MCS indication fields included in the DCI support triggering HARQ-ACK codebook re-transmission; second indication information, which is used to indicate whether one or more downlink cells scheduled by the DCI support performing PDSCH transmission when the HARQ-ACK codebook is re-transmitted.

In a third aspect, embodiments of the present disclosure provide an information processing apparatus comprising a memory, a transceiver, and a processor; the memory is used to store a computer program; the transceiver is used to send and receive data under the control of the processor; and the processor is used to read the computer program in the memory and perform the following operations: receiving DCI sent by a network device, wherein the DCI schedules at least one downlink cell in a first cell group; determining one or more slot locations of a re-transmitted HARQ-ACK codebook according to a first MCS indication field, wherein the first MCS indication field comprises one or more MCS indication fields included in the DCI, and one MCS indication field corresponds to one downlink cell in the first cell group.

In some embodiments of the present disclosure, the first MCS indication field includes at least one of the following: an MCS indication field corresponding to a first scheduled cell, wherein the first scheduled cell is an earliest downlink cell scheduled by the DCI, or a downlink cell with the smallest cell index value among downlink cells scheduled by the DCI; an MCS indication field corresponding to a second scheduled cell, wherein the second scheduled cell is a latest downlink cell scheduled by the DCI, or a downlink cell with the largest cell index value among downlink cells scheduled by the DCI; an MCS indication field corresponding to a first cell, wherein the first cell is a downlink cell with the largest cell index value in the first cell group; an MCS indication field corresponding to a second cell, wherein the second cell is a downlink cell with the smallest cell index value in the first cell group; an MCS indication field corresponding to one downlink cell indicated by higher-layer signaling; an MCS indication field corresponding to one downlink cell indicated by a first indication field included in the DCI.

In some embodiments of the present disclosure, the first MCS indication field includes at least one of the following: one or more MCS indication fields corresponding to third scheduled cells, wherein the third scheduled cells are downlink cells scheduled by the DCI; one or more MCS indication fields corresponding to third cells, wherein the third cells are downlink cells in the first cell group; one or more MCS indication fields corresponding to fourth cells, wherein the fourth cells are downlink cells in the first cell group that are not scheduled; one or more MCS indication fields corresponding to multiple downlink cells indicated by higher-layer signaling; one or more MCS indication fields corresponding to multiple downlink cells indicated by a first indication field included in the DCI.

In some embodiments of the present disclosure, the processor is configured to read the computer program in the memory and perform the following operations: determining, according to one MCS indication field in the first MCS indication field, one slot location of the re-transmitted HARQ-ACK codebook; or, determining, according to multiple MCS indication fields in the first MCS indication field, one slot location of the re-transmitted HARQ-ACK codebook; or, determining, according to multiple MCS indication fields in the first MCS indication field, multiple slot locations of the re-transmitted HARQ-ACK codebook, wherein one MCS indication field of the multiple MCS indication fields is used to determine one slot location of the multiple slot locations.

In some embodiments of the present disclosure, the processor is configured to read the computer program in the memory and perform the following operations: determining, according to an index value of one MCS indication field in the first MCS indication field, a value of a first parameter; and determining, according to the value of the first parameter and the slot location in which the terminal receives the DCI, the one slot location of the re-transmitted HARQ-ACK codebook.

In some embodiments of the present disclosure, the processor is configured to read the computer program in the memory and perform the following operations: determining, according to respective index values of each MCS indication field in the first MCS indication field, values of respective first parameters corresponding to each MCS indication field; and determining, according to a sum of the values of the respective first parameters corresponding to each MCS indication field of the multiple MCS indication fields in the first MCS indication field and the slot location in which the terminal receives the DCI, the one slot location of the re-transmitted HARQ-ACK codebook.

In some embodiments of the present disclosure, the processor is configured to read the computer program in the memory and perform the following operations: determining, according to respective index values of each MCS indication field in the first MCS indication field, values of respective first parameters corresponding to each MCS indication field; and determining, according to the values of respective first parameters corresponding to each MCS indication field and the slot location in which the terminal receives the DCI, the multiple slot locations of the re-transmitted HARQ-ACK codebook.

In some embodiments of the present disclosure, respective index values of each MCS indication field in the first MCS indication field are the same.

In some embodiments of the present disclosure, the processor is configured to read the computer program in the memory and perform the following operations: determining, according to an index value of any one MCS indication field in the first MCS indication field, a value of the first parameter; and determining, according to the value of the first parameter and the slot location in which the terminal receives the DCI, one slot location of the re-transmitted HARQ-ACK codebook.

In some embodiments of the present disclosure, the processor is configured to read the computer program in the memory and perform the following operations: splicing the re-transmitted HARQ-ACK codebooks according to an increasing or decreasing order of the one or more slot locations; re-transmitting the spliced HARQ-ACK codebook at a first slot location, wherein the first slot location is determined by a slot location in which the terminal receives the DCI and a value indicated by timing information included in the DCI.

In some embodiments of the present disclosure, the processor is configured to read the computer program in the memory and perform the following operations: receiving one or more PDSCHs from a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments of the present disclosure, the processor is configured to read the computer program in the memory and perform the following operations: receiving, by the terminal, first configuration information sent by the network device, wherein the first configuration information includes at least one of the following: first indication information, which is used to indicate whether one or more MCS indication fields included in the DCI support triggering HARQ-ACK codebook re-transmission; second indication information, which is used to indicate whether one or more downlink cells scheduled by the DCI support performing PDSCH transmission when the HARQ-ACK codebook is re-transmitted.

In a fourth aspect, embodiments of the present disclosure provide a terminal comprising: a first receiving unit configured to receive DCI sent by a network device, wherein the DCI schedules at least one downlink cell in a first cell group; a processing unit configured to determine one or more slot locations of a re-transmitted HARQ-ACK codebook according to a first MCS indication field, wherein the first MCS indication field comprises one or more MCS indication fields included in the DCI, and one MCS indication field corresponds to one downlink cell in the first cell group.

In a fifth aspect, embodiments of the present disclosure provide an information processing apparatus comprising a memory, a transceiver, and a processor; the memory is used to store a computer program; the transceiver is used to send and receive data under the control of the processor; and the processor is used to read the computer program in the memory and perform the following operations: determining, according to one or more slot locations of a re-transmitted HARQ-ACK codebook, a first MCS indication field; sending DCI to a terminal, wherein the DCI schedules at least one downlink cell in a first cell group, wherein the DCI is used to schedule at least one downlink cell in the first cell group, and the DCI comprises therein at least one MCS indication field, wherein the first MCS indication field comprises one or more MCS indication fields included in the DCI, and one MCS indication field corresponds to one downlink cell in the first cell group.

In some embodiments of the present disclosure, the first MCS indication field includes at least one of the following: an MCS indication field corresponding to a first scheduled cell, wherein the first scheduled cell is an earliest downlink cell scheduled by the DCI, or a downlink cell with the smallest cell index value among downlink cells scheduled by the DCI; an MCS indication field corresponding to a second scheduled cell, wherein the second scheduled cell is a latest downlink cell scheduled by the DCI, or a downlink cell with the largest cell index value among downlink cells scheduled by the DCI; an MCS indication field corresponding to a first cell, wherein the first cell is a downlink cell with the largest cell index value in the first cell group; an MCS indication field corresponding to a second cell, wherein the second cell is a downlink cell with the smallest cell index value in the first cell group; an MCS indication field corresponding to one downlink cell indicated by higher-layer signaling; an MCS indication field corresponding to one downlink cell indicated by a first indication field included in the DCI.

In some embodiments of the present disclosure, the first MCS indication field includes at least one of the following: one or more MCS indication fields corresponding to third scheduled cells, wherein the third scheduled cells are downlink cells scheduled by the DCI; one or more MCS indication fields corresponding to third cells, wherein the third cells are downlink cells in the first cell group; one or more MCS indication fields corresponding to fourth cells, wherein the fourth cells are downlink cells in the first cell group that are not scheduled; one or more MCS indication fields corresponding to multiple downlink cells indicated by higher-layer signaling; one or more MCS indication fields corresponding to multiple downlink cells indicated by a first indication field included in the DCI.

In some embodiments of the present disclosure, the processor is configured to read the computer program in the memory and perform the following operations: determining, by the network device, according to one slot location of the re-transmitted HARQ-ACK codebook, one MCS indication field, and determining the one MCS indication field as the first MCS indication field; or, determining, by the network device, according to one slot location of the re-transmitted HARQ-ACK codebook, multiple MCS indication fields, and determining the multiple MCS indication fields as the first MCS indication field; or, determining, by the network device, according to multiple slot locations of the re-transmitted HARQ-ACK codebook, multiple MCS indication fields, and determining the multiple MCS indication fields as the first MCS indication field, wherein one MCS indication field of the multiple MCS indication fields is used to determine one slot location of the multiple slot locations.

In some embodiments of the present disclosure, the processor is configured to read the computer program in the memory and perform the following operations: determining, by the network device, according to the one slot location of the re-transmitted HARQ-ACK codebook and the slot location in which the terminal receives the DCI, a value of a first parameter; determining, by the network device, according to the value of the first parameter, an index value of one MCS indication field; and determining, by the network device, the one MCS indication field corresponding to the index value as the first MCS indication field.

In some embodiments of the present disclosure, the processor is configured to read the computer program in the memory and perform the following operations: determining, by the network device, according to the one slot location of the re-transmitted HARQ-ACK codebook and the slot location in which the terminal receives the DCI, a sum of the values of the respective first parameters corresponding to the multiple MCS indication fields; determining, by the network device, according to the sum of the values of the respective first parameters corresponding to the multiple MCS indication fields, respective index values of each MCS indication field in the multiple MCS indication fields; and determining, by the network device, the multiple MCS indication fields corresponding to respective index values as the first MCS indication field.

In some embodiments of the present disclosure, the processor is configured to read the computer program in the memory and perform the following operations: determining, by the network device, according to the multiple slot locations of the re-transmitted HARQ-ACK codebook and the slot location in which the terminal receives the DCI, values of respective first parameters corresponding to each MCS indication field in the multiple MCS indication fields; determining, by the network device, according to the values of respective first parameters corresponding to each MCS indication field, respective index values of each MCS indication field; and determining, by the network device, the multiple MCS indication fields corresponding to respective index values as the first MCS indication field.

In some embodiments of the present disclosure, respective index values of each MCS indication field in the first MCS indication field are the same.

In some embodiments of the present disclosure, the processor is configured to read the computer program in the memory and perform the following operations: determining, by the network device, according to one or more slot locations of a re-transmitted HARQ-ACK codebook and the slot location in which the terminal receives the DCI, the value of the first parameter; determining, by the network device, according to the value of the first parameter, a first index value; and determining, by the network device, one or more MCS indication fields as the first MCS indication field, and configuring an index value of each of the one or more MCS indication fields as the first index value.

In some embodiments of the present disclosure, the processor is configured to read the computer program in the memory and perform the following operations: receiving, by the network device, the HARQ-ACK codebook re-transmitted by the terminal at a first slot location, wherein the first slot location is determined by a slot location in which the terminal receives the DCI and a value indicated by timing information included in the DCI.

In some embodiments of the present disclosure, the processor is configured to read the computer program in the memory and perform the following operations: sending, by the network device, one or more PDSCHs to a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments of the present disclosure, the processor is configured to read the computer program in the memory and perform the following operations: sending, by the network device, first configuration information to the terminal, wherein the first configuration information includes at least one of the following: first indication information, which is used to indicate whether one or more MCS indication fields included in the DCI support triggering HARQ-ACK codebook re-transmission; second indication information, which is used to indicate whether one or more downlink cells scheduled by the DCI support performing PDSCH transmission when the HARQ-ACK codebook is re-transmitted.

In a sixth aspect, embodiments of the present disclosure provide a network device, which includes: a processing unit configured to determine, according to one or more slot locations of a re-transmitted HARQ-ACK codebook, a first MCS indication field; a first sending unit configured to send DCI to a terminal, wherein the DCI schedules at least one downlink cell in a first cell group, wherein the DCI is used to schedule at least one downlink cell in the first cell group, and the DCI comprises therein at least one MCS indication field, wherein the first MCS indication field comprises one or more MCS indication fields included in the DCI, and one MCS indication field corresponds to one downlink cell in the first cell group.

In a seventh aspect, embodiments of the present disclosure provide a processor-readable storage medium storing therein a computer program, wherein the computer program is configured to cause a processor to execute the above information processing methods, or the computer program is configured to cause the processor to execute the above information processing methods.

According to the embodiments of the present disclosure, the terminal receives the DCI used for scheduling at least one downlink cell in the first cell group sent by the network device, and determines one or more slot locations of a re-transmitted HARQ-ACK codebook according to a first MCS indication field (that is, one or more MCS indication fields included in the DCI). That is, when multiple MCS indication fields are included in the DCI, the terminal can determine one or more slot locations of the re-transmitted HARQ-ACK codebook according to the first MCS indication field (that is, determine the HARQ-ACK codebook with one or more slots coding as m for re-transmission), thereby solving the problem of how the terminal determines the slot locations of the re-transmitted HARQ codebook when the DCI contains multiple MCS indication fields, for which there is currently no solution.

### BRIEF DESCRIPTION OF THE DRAWINGS

FIG. 1 is a schematic diagram showing HARQ-ACK codebook re-transmission according to an embodiment of the present disclosure;
FIG. 2 is a flowchart of an information processing method on a terminal side according to an embodiment of the present disclosure;
FIG. 3 is a flowchart showing another information processing method on a network device side according to an embodiment of the present disclosure;
FIG. 4 is a block diagram of an information processing apparatus on a terminal side according to an embodiment of the present disclosure;
FIG. 5 shows a block diagram of a terminal according to an embodiment of the present disclosure;
FIG. 6 is a block diagram showing an information processing apparatus on a network device side according to an embodiment of the present disclosure; and
FIG. 7 shows a block diagram of a network device according to an embodiment of the present disclosure.

### DETAILED DESCRIPTION

To make the technical problems, technical solutions, and advantages to be solved by the present disclosure clearer, a detailed description will be given below in conjunction with the accompanying drawings and specific embodiments. In the following description, specific details such as specific configurations and components are provided only to help fully understand the embodiments of the present disclosure. Therefore, it should be clear to those skilled in the art that various changes and modifications can be made to the embodiments described herein without departing from the scope and spirit of the present disclosure. In addition, for the sake of clarity and brevity, descriptions concerning known functions and configurations have been omitted.

It should be understood that references throughout this specification to "one embodiment" or "an embodiment" mean that a particular feature, structure, or characteristic associated with the embodiment is included in at least one embodiment of the present disclosure. Therefore, the appearances of "in one embodiment" or "in an embodiment" throughout this specification do not necessarily refer to the same embodiment. Furthermore, these particular features, structures, or characteristics may be combined in any suitable manner in one or more embodiments.

In the various embodiments of the present disclosure, it should be understood that an order/sequence of the serial numbers of the following processes does not necessarily imply the order of execution. The execution order of each process should be determined by its function and internal logic, and should not constitute any limitation on the implementation process of the embodiments of the present disclosure.

Additionally, the terms "system" and "network" are often used interchangeably herein.

Technical solutions provided by the embodiments of the present disclosure can be applied to a variety of systems, particularly fifth-generation (5G) mobile communication systems. For example, applicable systems may include global system of mobile communication (GSM) systems, code division multiple access (CDMA) systems, wideband code division multiple access (WCDMA) general packet radio service (GPRS) systems, long-term evolution (LTE) systems, LTE frequency division duplex (FDD) systems, LTE time division duplex (TDD) systems, long-term evolution advanced (LTE-A) systems, universal mobile telecommunication systems (UMTS), worldwide interoperability for microwave access (WiMAX) systems, and 5G New Radio (NR) systems. These various systems include terminal devices and network devices. The systems may also include core network components, such as the Evolved Packet System (EPS) and the 5G System (5GS).

Network devices and terminal devices can each use one or more antennas for Multiple Input Multiple Output (MIMO) transmission. MIMO transmission can be either Single User MIMO (SU-MIMO) or Multiple User MIMO (MU-MIMO). Depending on the configuration and number of antennas, MIMO transmission can be two-dimensional MIMO (2D-MIMO), three-dimensional MIMO (3D-MIMO), full-dimensional MIMO (FD-MIMO), or massive MIMO. It can also employ diversity transmission, precoding, beamforming, and so forth.

In various embodiments of the present disclosure, the term "and/or" describes association relationships between associated objects, indicating that three relationships can exist. For example, A and/or B can represent three situations: A exists alone, A and B exist simultaneously, and B exists alone. The character "/" alone generally indicates that the associated objects are in an "or" relationship.

In various embodiments of the present disclosure, the term "plurality" refers to two or more than two, and other quantifiers are similar thereto.

The following will be combined with the accompanying drawings in the embodiments of the present disclosure to clearly and completely describe the technical solutions according to the embodiments of the present disclosure. Obviously, the embodiments described are only part of the embodiments of the present disclosure and not all of the embodiments. Based on the embodiments of the present disclosure, all other embodiments obtained by ordinary technicians in this field without making any creative efforts shall fall within the scope of protection of the present disclosure.

The following is brief explanations regarding the relevant technologies involved in this disclosure:

### 1. HARQ-ACK Codebook Re-transmission

In the downlink cell PDSCH scheduling signaling DCI, HARQ-ACK codebook re-transmission is supported. For example, if the HARQ-ACK codebook re-transmission indicator in the DCI is 1, it instructs the terminal to re-transmit the HARQ-ACK codebook. The specific scheme is as follows:
Step 1: According to the MCS indication field in the DCI, determining the HARQ-ACK codebook with slot location(s) being m to be re-transmitted, that is, determining the HARQ-ACK codebook with slot coding as m for re-transmission.

For example, a calculation method for obtaining the slot location(s) being m of the re-transmitted HARQ-ACK codebook is: m=n-L.

Herein, n is the slot location in which the terminal receives the DCI.

Herein, L is a value corresponding to the index (MCS-index) of the MCS indication field in the DCI. For example, if MCS-index = 0, L = -7; if MCS-index = 1, L = -6; if MCS-index = 2, L = -5...... MCS-index = 31, L = 24.

Step 2: According to the k1 timing information in the DCI, determining the slot location n+k of the re-transmitted HARQ-ACK codebook for this transmission.

For example, the slot location of the re-transmitted HARQ codebook for this transmission is n+k, where n is the slot location in which the terminal receives the DCI, and k is the value indicated by the k1 timing information in the DCI.

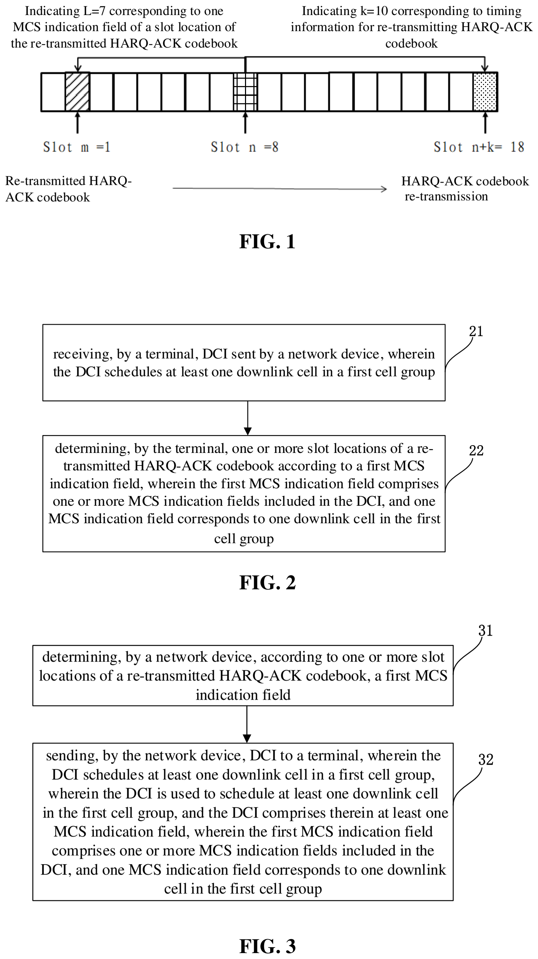

As shown in FIG. 1, at slot n = 8, the terminal receives a DCI from the network device, which instructs the terminal the HARQ-ACK codebook to be re-transmitted. The L value corresponding to the index value of the MCS indication field is 7, and the value indicated by the k1 timing information is 10. The terminal then needs to re-transmit the HARQ-ACK codebook at slot m = 8 - 7 = 1 at slot n + k = 8 + 18 = 18.

It should be noted that, here it can be considered that there is only one transmitted HARQ-ACK codebook at the slot location (slot m).

### 2. Multi-Cell PDSCH Scheduling

Multi-cell PDSCH scheduling means that a network device uses DCI format 1_X to schedule PDSCHs on multiple cells. The specific solution is as follows:

### (1) The base station defines a set(group) of cells for multi-cell PDSCH scheduling

A cell set(group) contains multiple cells, and DCI format 1_X can schedule one or more cells in the cell set at a time. For example, cell set-1 is configured with four(4) cells (cell-1, cell-2, cell-3, cell-4). DCI format 1_X can schedule one or more cell among these four cells. The specific scheduling of the cell or cells is indicated by one or more fields in the DCI, for example, by the following implicit indication or explicit indication.

**Implicit indication:** It is indicated by a special value of the frequency domain resource assignment (FDRA) (similar to the above method of determining whether there is PDSCH transmission). That is, if the FDRA field indication of the corresponding configured cell is a special value (such as FDRA is all 0), it is considered that this cell is not scheduled.

**Explicit indication:** In DCI format 1_X, a co-scheduled indicator is included, which indicates which cell or cells are scheduled.

The implicit indication mentioned above can be used to determine that there is no PDSCH scheduling or no PDSCH transmission in the following situations:

If the resource allocation mode is Resource Allocation Type 0 and the values indicated by the FDRA field are all 0;

If the resource allocation mode is Resource Allocation Type 1 and the values indicated by the FDRA field are all 1;

If the resource allocation mode is Dynamic Switch, the values indicated by the FDRA field are all 1 or all 0.

It should be noted that when a network device is configured with multiple cell sets, it is necessary to indicate in DCI format 1_X which cell set or sets are scheduled.

### (2) In DCI format 1_X, each cell has an independent MCS indication field

In DCI format 1_X, each scheduled cell has its own independent MCS indication field. For example, cell set-1 is configured with four(4) cells (cell-1, cell-2, cell-3, cell-4), and the network device can schedule up to four cells. In this case, there can be four MCS indication fields in DCI format 1_X, each MCS indication field corresponding to one cell, such as MCS-index1 for cell-1, MCS-index2 for cell-2, MCS-index3 for cell-3, MCS-index4 for cell-4, and so forth.

Various embodiments of the present disclosure provide information processing methods, information processing apparatuses, terminals, and network devices to address the currently not yet resolved problem of how a terminal determines slot location(s) of a re-transmitted HARQ codebook when multiple MCS indication fields are included in a DCI. The methods and apparatuses (or terminals or network devices) are based on the same invention concept. Because the principles underlying the problems solved by the methods and apparatuses (or terminal or network device) are similar, their implementations can be referenced to each other, and any same/similar description will not be repeated.

As shown in FIG. 2, an embodiment of the present disclosure provides an information processing method, which specifically includes the following steps:
Step 21: receiving, by a terminal, DCI sent by a network device, wherein the DCI schedules at least one downlink cell in a first cell group.

In some embodiments, the first cell group may include one or more downlink cells, and the DCI may schedule at least one cell in the first cell group. For example, if the first cell group includes four downlink cells (cell-1, cell-2, cell-3, and cell-4), the DCI may schedule one or more downlink cells among the four downlink cells (cell-1, cell-2, cell-3, and cell-4).

In some embodiments, the DCI includes one or more MCS indication fields. For example, if the first cell includes four downlink cells (cell-1, cell-2, cell-3, and cell-4), the DCI may include four MCS indication fields, with one MCS indication field corresponding to one downlink cell. Alternatively, if the first cell includes four downlink cells (cell-1, cell-2, cell-3, and cell-4), and the DCI actually schedules cell-2 and cell-3, the DCI may include two MCS indication fields, one corresponding to cell-2 and the other corresponding to cell-3, respectively. The MCS indication fields for different downlink cells are independent, meaning that one MCS indication field corresponds to one downlink cell in the first cell group.

Step 22: determining, by the terminal, one or more slot locations of a re-transmitted HARQ-ACK codebook according to a first MCS indication field, wherein the first MCS indication field comprises one or more MCS indication fields included in the DCI, and one MCS indication field corresponds to one downlink cell in the first cell group.

In some embodiments, one or more slot locations of the re-transmitted HARQ-ACK codebook, that is, the HARQ-ACK codebook that determines one or more slot locations (also referred to as slot coding or slot index values, etc.) is re-transmitted.

In some embodiments, the first MCS indication field includes one or more MCS indication fields contained in the DCI, for example, the first MCS indication field includes an MCS indication field corresponding to each of one or more scheduled cells in the DCI, or the first MCS indication field includes an MCS indication field corresponding to each of one or more downlink cells in the DCI (here the downlink cell may be a scheduled cell in the first cell group, or may be a downlink cell that is not scheduled in the first cell group).

For example, if the DCI includes an MCS indication field corresponding to each downlink cell in the first cell group, the first MCS indication field may be the MCS indication field corresponding to one or more scheduled cells in the DCI, or the first MCS indication field may also be the MCS indication field corresponding to one or more downlink cells in the DCI respectively. If the DCI only includes an MCS indication field corresponding to each scheduled cell in the first cell group, the first MCS indication field is the MCS indication field corresponding to one or more scheduled cells in the DCI respectively.

It should be noted that a downlink cell can correspond to one or more MCS indication fields, and usually a downlink cell corresponds to one MCS indication field. If a downlink cell corresponds to multiple MCS indication fields, one of the MCS indication fields is determined (for example, based on higher-layer signaling, or protocol agreement, or other indication field indications in DCI, etc.). That is, for a downlink cell, the first MCS indication field includes an MCS indication field corresponding to this downlink cell. For example, a downlink cell has two MCS indication fields (such as MCS indication fields corresponding to two transport blocks (TB) respectively), then this downlink cell can use the MCS indication field of transport block 1 or the MCS indication field of transport block 2.

In the above scheme, the terminal receives the DCI of at least one downlink cell in the first cell group scheduled and sent by the network device, and determines the one or more slot locations of the re-transmitted HARQ-ACK codebook according to the first MCS indication field (that is, one or more MCS indication fields included in the DCI). That is, when multiple MCS indication fields are included in the DCI, the terminal can determine the one or more slot locations of the re-transmitted HARQ-ACK codebook according to the first MCS indication field (that is, determine the HARQ-ACK codebook with one or more slot coding being m for re-transmission), thereby solving the problem of how the terminal determines the slot location(s) of the re-transmitted HARQ codebook when multiple MCS indication fields are included in the DCI, for which there is currently no solution.

In some embodiments, the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling; for example, one downlink cell indicated by higher-layer signaling may be a downlink cell determined out of the first cell group (this downlink cell may be a scheduled cell, or may be a downlink cell that is not scheduled in the first cell group), or a downlink cell indicated by higher-layer signaling may be a scheduled cell determined out of all scheduled cells, or a downlink cell indicated by higher-layer signaling may be a downlink cell determined out of downlink cells that are not scheduled, etc.;
an MCS indication field corresponding to one downlink cell indicated by a first indication field included in the DCI; for example, the first indication field may be an FDRA indication field, such as a downlink cell indicated by the first indication field may be a downlink cell determined out of the first cell group (this downlink cell may be a scheduled cell, or may be a downlink cell that is not scheduled in the first cell group), or a downlink cell indicated by the first indication field may also be a scheduled cell determined out of all scheduled cells, or a downlink cell indicated by the first indication field may also be a downlink cell determined out of downlink cells that are not scheduled, etc.

As an optional implementation method, when the first MCS indication field includes one MCS indication field in the DCI, the first MCS indication field includes the above item; when the first MCS indication field includes multiple MCS indication fields in the DCI (such as at least two MCS indication fields), the first MCS indication field includes the above multiple items (that is, at least two of the above items), etc. The embodiments of the present disclosure are not limited to this.

The following examples illustrate various cases where the first MCS indication field is one MCS indication field.

### Example 1: DCI schedules only one downlink cell in the first cell group

The DCI schedules only one downlink cell in the first cell group. That is, from the terminal's perspective, when the DCI schedules a downlink cell in the first cell group, the number of scheduled downlink cells does not exceed one. When the DCI schedules only one downlink cell in the first cell group (that is, there is only one scheduled cell), the first MCS indication field is the MCS indication field corresponding to the scheduled cell. The terminal can determine the one downlink cell scheduled by the DCI (that is, determine the one scheduled cell) based on an explicit indication or an implicit indication in the DCI, and determine the MCS indication field of the scheduled cell as the first MCS indication field.

### Example 2: DCI schedules multiple downlink cells in the first cell group

When the DCI schedules multiple downlink cells in the first cell group (i.e., there are multiple scheduled cells), the terminal may select one of the multiple scheduled cells. The terminal may determine the multiple downlink cells scheduled by the DCI (i.e., determine the multiple scheduled cells) based on an explicit indication or an implicit indication in the DCI, select one of the scheduled cells, and determine the MCS indication field corresponding to the scheduled cell as the first MCS indication field. For example, the terminal may select the scheduled cell with the smallest cell index value (index) from the multiple downlink cells scheduled by the DCI (i.e., multiple scheduled cells), and determine the MCS indication field corresponding to the scheduled cell as the first MCS indication field. Alternatively, the terminal may select the scheduled cell with the largest cell index value (index) from the multiple downlink cells scheduled by the DCI (i.e., multiple scheduled cells), and determine the MCS indication field corresponding to the scheduled cell as the first MCS indication field. Alternatively, the terminal may select the first scheduled cell from the multiple downlink cells scheduled by the DCI (i.e., multiple scheduled cells), and determine the MCS indication field corresponding to the scheduled cell as the first MCS indication field. Alternatively, the terminal may select the last scheduled cell from the multiple downlink cells scheduled by the DCI (i.e., multiple scheduled cells), and determine the MCS indication field corresponding to the scheduled cell as the first MCS indication field. Alternatively, the terminal may also select a scheduled cell indicated by the higher-layer signaling from the multiple downlink cells scheduled by the DCI (i.e., multiple scheduled cells), and determine the MCS indication field corresponding to the scheduled cell as the first MCS indication field. Alternatively, the terminal may also select a scheduled cell indicated by the first indication field included in the DCI from the multiple downlink cells scheduled by the DCI (i.e., multiple scheduled cells), and determine the MCS indication field corresponding to the scheduled cell as the first MCS indication field, etc. The embodiments of the present disclosure are not limited thereto.

### Example 3: DCI schedules one or more downlink cells in the first cell group

The terminal may select a configured downlink cell in the first cell group (this configured downlink cell may be a scheduled cell or an unscheduled downlink cell). For example, the terminal may select the downlink cell with the smallest cell index value (index) from the first cell group (i.e., downlink cells configurable for DCI scheduling), and determine the MCS indication field corresponding to this downlink cell as the first MCS indication field. Alternatively, the terminal may select the downlink cell with the largest cell index value (index) from the first cell group (i.e., downlink cells configurable for DCI scheduling), and determine the MCS indication field corresponding to this downlink cell as the first MCS indication field. Alternatively, the terminal may select the first downlink cell from the first cell group (i.e., downlink cells configurable for DCI scheduling), and determine the MCS indication field corresponding to this downlink cell as the first MCS indication field. Alternatively, the terminal may select the last downlink cell from the first cell group (i.e., downlink cells configurable for DCI scheduling), and determine the MCS indication field corresponding to this downlink cell as the first MCS indication field. Alternatively, the terminal may select a downlink cell indicated by the higher-layer signaling from the first cell group (i.e., downlink cells configurable for DCI scheduling), and determine the MCS indication field corresponding to this downlink cell as the first MCS indication field. Alternatively, the terminal may select one downlink cell indicated by the first indication field in the DCI from the first cell group (i.e., downlink cells configurable for DCI scheduling), and determine the MCS indication field corresponding to this downlink cell as the first MCS indication field, etc. The embodiments of the present disclosure are not limited to this.

In some embodiments, the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling; for example, the multiple downlink cells indicated by higher-layer signaling may be part or all of the scheduled cells indicated by higher-layer signaling, or may be part or all of the downlink cells in all the downlink cells in the first cell group indicated by higher-layer signaling (here the downlink cell may be a scheduled cell or an unscheduled cell), or may be part or all of the downlink cells in all the unscheduled downlink cells in the first cell group indicated by higher-layer signaling, etc., and the embodiments of the present disclosure are not limited to this;
one or more MCS indication fields corresponding to multiple downlink cells indicated by a first indication field included in the DCI; for example, the first indication field may be an FDRA indication field; the multiple downlink cells indicated by the first indication field may be part or all of the scheduled cells indicated by the first indication field, or may be part or all of the downlink cells in all the downlink cells in the first cell group indicated by the first indication field (here the downlink cell may be a scheduled cell or an unscheduled cell), or may be part or all of the downlink cells in all the unscheduled downlink cells in the first cell group indicated by the first indication field, etc., and the embodiments of the present disclosure are not limited to this.

As an implementation method in some embodiments: when the first MCS indication field includes one of the above items, a slot location may be jointly determined by multiple MCS indication fields, or multiple slot locations may be separately determined by multiple MCS indication fields; when the first MCS indication field includes multiple items (i.e., at least two of the above items), a slot location may be jointly determined by multiple MCS indication fields corresponding to each of the multiple items, or a slot location may be jointly determined by multiple MCS indication fields of all items, etc., and the embodiments of the present disclosure are not limited to this.

In some embodiments, the determining, by the terminal, the one or more slot locations of the re-transmitted HARQ-ACK codebook according to a first MCS indication field may include:
determining, by the terminal, according to one MCS indication field in the first MCS indication field, one slot location of the re-transmitted HARQ-ACK codebook; for example, when the first MCS indication field includes an MCS indication field, one slot location of the re-transmitted HARQ-ACK codebook is determined according to the MCS indication field; or,
determining, by the terminal, according to multiple MCS indication fields in the first MCS indication field, one slot location of the re-transmitted HARQ-ACK codebook; for example, when the first MCS indication field includes multiple MCS indication fields, a slot location of the re-transmitted HARQ-ACK codebook can be jointly determined according to the multiple MCS indication fields; or,
determining, by the terminal, according to multiple MCS indication fields in the first MCS indication field, multiple slot locations of the re-transmitted HARQ-ACK codebook, wherein one MCS indication field of the multiple MCS indication fields is used to determine one slot location of the multiple slot locations; for example, when the first MCS indication field includes multiple MCS indication fields, one slot location of the re-transmitted HARQ-ACK codebook can be determined based on each MCS indication field in the multiple MCS indication fields, that is, multiple slot locations of the re-transmitted HARQ-ACK codebook are determined.

Specifically, the determining, by the terminal, according to one MCS indication field in the first MCS indication field, the one slot location of the re-transmitted HARQ-ACK codebook may include:
determining, by the terminal, according to an index value of one MCS indication field in the first MCS indication field, a value of a first parameter; and
determining, by the terminal, according to the value of the first parameter and the slot location in which the terminal receives the DCI, the one slot location of the re-transmitted HARQ-ACK codebook.

For example, when the first MCS indication field includes one MCS indication field (this indication field can be determined by any methods in which the first MCS indication field includes one MCS indication field), the terminal can determine a value of the parameter L corresponding to the index value of the one MCS indication field (that is, the value of the first parameter) according to the mapping relationship between the index value of the one MCS indication field and the value of the parameter L, and determine one slot location of the re-transmitted HARQ-ACK codebook according to a formula m=n-L, where m is the slot location of the re-transmitted HARQ-ACK codebook, n is the slot location in which the terminal receives the DCI, and L is the value of the first parameter.

Specifically, the determining, by the terminal, according to multiple MCS indication fields in the first MCS indication field, the one slot location of the re-transmitted HARQ-ACK codebook may include:
determining, by the terminal, according to respective index values of each MCS indication field in the first MCS indication field, values of respective first parameters corresponding to each MCS indication field; and
determining, by the terminal, according to a sum of the values of the respective first parameters corresponding to each MCS indication field of the multiple MCS indication fields in the first MCS indication field and the slot location in which the terminal receives the DCI, the one slot location of the re-transmitted HARQ-ACK codebook.

For example, when the first MCS indication field includes multiple MCS indication fields (these multiple indication fields can be determined by any methods in which the first MCS indication field includes multiple MCS indication fields), the terminal can determine a value of the parameter L (i.e., the value of the first parameter) corresponding to the index value of each MCS indication field in the multiple MCS indication fields based on the mapping relationship between the index values of the multiple MCS indication fields and the value of the parameter L, and then obtain a sum of the values of the parameter L of each of all MCS indication fields in the multiple MCS indication fields. The terminal can determine one slot location of the re-transmitted HARQ-ACK codebook according to the formula m=n-L₁, where m is the slot location of the re-transmitted HARQ-ACK codebook, n is the slot location in which the terminal receives the DCI, and L₁ is a sum of the values of the parameter L of each of all MCS indication fields in the multiple MCS indication fields.

Specifically, the determining, by the terminal, according to multiple MCS indication fields in the first MCS indication field, the multiple slot locations of the re-transmitted HARQ-ACK codebook may include:
determining, by the terminal, according to respective index values of each MCS indication field in the first MCS indication field, values of respective first parameters corresponding to each MCS indication field; and
determining, by the terminal, according to the values of respective first parameters corresponding to each MCS indication field and the slot location in which the terminal receives the DCI, the multiple slot locations of the re-transmitted HARQ-ACK codebook.

For example, when the first MCS indication field includes multiple MCS indication fields (these multiple indication fields can be determined by any methods in which the first MCS indication field includes multiple MCS indication fields), the terminal can determine a value of the parameter L (i.e., the value of the first parameter) corresponding to the index value of each MCS indication field in the multiple MCS indication fields based on the mapping relationship between the index values of the multiple MCS indication fields and the value of the parameter L, and determine one slot location of the re-transmitted HARQ-ACK codebook based on each MCS indication field according to a formula m=n-Lᵢ, thereby determining multiple slot locations. Here, m is the slot location of the re-transmitted HARQ-ACK codebook, n is the slot location in which the terminal receives the DCI, and Lᵢ is the value of the parameter L of the i-th MCS indication field in the multiple MCS indication fields.

In some embodiments, respective index values of each MCS indication field in the first MCS indication field are the same.

For example, for multi-cell scheduling, the network device can also set the index values of respective MCS indication fields of downlink cells (such as all scheduled cells or all configured downlink cells in the first cell group) to the same value. In this way, no matter which MCS index value corresponding to a certain cell is used by the terminal, the calculated value of the parameter L is the same, thereby reducing the complexity of relevant protocol(s) associated therewith.

In some embodiments, the determining, by the terminal, the one or more slot locations of the re-transmitted HARQ-ACK codebook according to the first MCS indication field may include:
determining, by the terminal, according to an index value of any one MCS indication field in the first MCS indication field, a value of the first parameter; and
determining, by the terminal, according to the value of the first parameter and the slot location in which the terminal receives the DCI, one slot location of the re-transmitted HARQ-ACK codebook.

For example, when the network device configures the index values of the MCS indication fields corresponding to downlink cells to be the same, the terminal can determine a value of the parameter L (i.e., the value of the first parameter) corresponding to the index value of any MCS indication field in the first MCS indication field based on the mapping relationship between the index value of the MCS indication field and the value of the parameter L. The terminal can also determine one slot location of the re-transmitted HARQ-ACK codebook based on a formula m=n-L, where m is the slot location of the re-transmitted HARQ-ACK codebook, n is the slot location in which the terminal receives the DCI, and L is the value of the first parameter.

In some embodiments, the terminal can also determine multiple slot locations based on m*N, N=1,2,3..., where N can be configured by the network device side or agreed upon by relevant protocol(s) or determined by the number of MCS indication fields in the first MCS indication field, etc. The embodiments of the present disclosure are not limited to this.

In some embodiments, after the terminal determines one or more slot locations of the re-transmitted HARQ-ACK codebook according to the first MCS indication field, the method further includes:
splicing, by the terminal, the re-transmitted HARQ-ACK codebooks according to an increasing or decreasing order of the one or more slot locations;
re-transmitting, by the terminal, the spliced HARQ-ACK codebook at a first slot location, wherein the first slot location is determined by a slot location in which the terminal receives the DCI and a value indicated by timing information included in the DCI.

For example, when the first MCS indication field includes multiple MCS indication fields, the terminal may jointly determine one slot location of the re-transmitted HARQ-ACK codebook based on the multiple MCS indication fields. Alternatively, multiple slot locations of the re-transmitted HARQ-ACK codebook may be determined based on multiple MCS indication fields. For example, when the index values of the MCS indication fields corresponding to different downlink cells are different, the terminal may determine the values of multiple parameters L according to its capabilities (some specific determination methods may refer to the above embodiments), thereby calculating multiple different values m (i.e., determining multiple different slot locations), and re-transmitting the HARQ-ACK codebooks of the multiple slot locations at the first slot location.

Specifically, the HARQ-ACK codebooks of the multiple slot locations are sequentially spliced in ascending order (or descending order) according to the corresponding slot locations (i.e., slot coding values or index values), and the spliced HARQ-ACK codebook is re-transmitted at the first slot location. For example, the first slot location is determined by the slot location in which the terminal receives the DCI and value(s) indicated by the timing information included in the DCI. For example, the first slot location is n+k, where n is the slot location in which the terminal receives the DCI, and k is the value indicated by the timing information included in the DCI (e.g., k1 timing information indication value).

In some embodiments, subsequent to the receiving, by the terminal, the DCI sent by the network device, the method may further include:
receiving, by the terminal, one or more PDSCHs from a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

For example, in a DCI used for multi-cell scheduling, the scheduled cells are indicated as: cell-2, cell-3, and cell-4. The MCS indication field corresponding to cell-2 is used to determine the slot location of the re-transmitted HARQ-ACK codebook. Therefore, the cells used to transmit the PDSCH(s) are cell-3 and cell-4.

In this embodiment, the slot location of the re-transmitted HARQ-ACK codebook is determined by the first MCS indication field, and PDSCH transmission is indicated by MCS indication field(s) (i.e., the MCS indication field(s) corresponding to the fourth scheduled cell) other than the first MCS indication field. This solves the problem of determining the re-transmitted HARQ-ACK codebook in terms of the multi-cell scheduling, thereby improving scheduling flexibility.

In some embodiments, prior to the receiving, by the terminal, the DCI sent by the network device, the method may further include:
receiving, by the terminal, first configuration information sent by the network device, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

For example, the first indication information may be a HARQ-ACK codebook re-transmission indicator, which may be recorded as: pdsch-HARQ-ACK-Retx1_X and used to indicate whether triggering of HARQ-ACK codebook re-transmission is supported in the DCI used for multi-cell scheduling indication. For example, when the HARQ-ACK codebook re-transmission indicator is 1, the terminal believes that the DCI has triggered HARQ-ACK codebook re-transmission; otherwise, the terminal believes that the DCI has not triggered HARQ-ACK codebook re-transmission. Alternatively, if the HARQ-ACK codebook re-transmission indicator is 1, the terminal believes that the DCI has not triggered HARQ-ACK codebook re-transmission; otherwise, the terminal believes that the DCI has triggered HARQ-ACK codebook re-transmission. The embodiments of the present disclosure are not limited to this.

For example, when the first indication information indicates that one or more MCS indication fields contained in the DCI support the triggering of HARQ-ACK codebook re-transmission, that is, when the HARQ-ACK codebook re-transmission indicator indicates the HARQ-ACK codebook re-transmission, the second indication information further indicates whether one or more scheduled cells support PDSCH transmission. For instance, if the HARQ-ACK codebook re-transmission indicator indicates that the DCI triggers the HARQ-ACK codebook re-transmission, the terminal determines whether to receive the PDSCH transmission indicated by the same scheduling signaling (i.e., DCI) based on the second indication information. If the second indication information indicates supporting for PDSCH transmission in one or more downlink cells scheduled by the DCI, then the terminal may receive PDSCH on a fourth scheduled cell. Here, the fourth scheduled cell includes one or more scheduled cells other than the first downlink cell, wherein the first downlink cell is the downlink cell used to determine the one or more slot locations of the re-transmitted HARQ-ACK codebook.

Various embodiments of the present disclosure may refer to devices that provide voice and/or data connectivity to users, handheld devices with wireless connectivity, or other processing devices connected to a wireless modem. The names of terminal devices may vary across different systems. For example, in 5G systems, terminal devices may be referred to as User Equipment (UE). Wireless terminal devices can communicate with one or more Core Networks (CNs) via a Radio Access Network (RAN). Wireless terminal devices may be mobile terminal devices, such as mobile phones (also known as "cellular" phones) and computers with mobile terminal devices. For example, they may be portable, pocket-sized, handheld, built-in, or in-vehicle mobile devices that exchange voice and/or data with a radio access network. Examples include Personal Communication Service (PCS) phones, cordless phones, Session Initiated Protocol (SIP) phones, Wireless Local Loop (WLL) stations, and Personal Digital Assistants (PDAs). The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present disclosure.

As shown in FIG. 3, an embodiment of the present disclosure provides an information processing method, which includes the following steps:
Step 31: determining, by a network device, according to one or more slot locations of a re-transmitted HARQ-ACK codebook, a first MCS indication field;
Step 32: sending, by the network device, DCI to a terminal, wherein the DCI schedules at least one downlink cell in a first cell group, wherein the DCI is used to schedule at least one downlink cell in the first cell group, and the DCI includes therein at least one MCS indication field.

Specifically, the first MCS indication field includes one or more MCS indication fields included in the DCI, and one MCS indication field corresponds to one downlink cell in the first cell group.

In some embodiments, the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

In some embodiments, the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

In some embodiments, the determining, by the network device, according to one or more slot locations of the re-transmitted HARQ-ACK codebook, the first MCS indication field may include:
determining, by the network device, according to one slot location of the re-transmitted HARQ-ACK codebook, one MCS indication field, and determining the one MCS indication field as the first MCS indication field; or,
determining, by the network device, according to one slot location of the re-transmitted HARQ-ACK codebook, multiple MCS indication fields, and determining the multiple MCS indication fields as the first MCS indication field; or,
determining, by the network device, according to multiple slot locations of the re-transmitted HARQ-ACK codebook, multiple MCS indication fields, and determining the multiple MCS indication fields as the first MCS indication field, wherein one MCS indication field of the multiple MCS indication fields is used to determine one slot location of the multiple slot locations.

In some embodiments, the determining, by the network device, according to one slot location of the re-transmitted HARQ-ACK codebook, one MCS indication field, and determining the one MCS indication field as the first MCS indication field may include:
determining, by the network device, according to the one slot location of the re-transmitted HARQ-ACK codebook and the slot location in which the terminal receives the DCI, a value of a first parameter;
determining, by the network device, according to the value of the first parameter, an index value of one MCS indication field; and
determining, by the network device, the one MCS indication field corresponding to the index value as the first MCS indication field.

In some embodiments, the determining, by the network device, according to one slot location of the re-transmitted HARQ-ACK codebook, multiple MCS indication fields, and determining the multiple MCS indication fields as the first MCS indication field may include:
determining, by the network device, according to the one slot location of the re-transmitted HARQ-ACK codebook and the slot location in which the terminal receives the DCI, a sum of the values of the respective first parameters corresponding to the multiple MCS indication fields;
determining, by the network device, according to the sum of the values of the respective first parameters corresponding to the multiple MCS indication fields, respective index values of each MCS indication field in the multiple MCS indication fields; and
determining, by the network device, the multiple MCS indication fields corresponding to respective index values as the first MCS indication field.

In some embodiments, the determining, by the network device, according to multiple slot locations of the re-transmitted HARQ-ACK codebook, multiple MCS indication fields, and determining the multiple MCS indication fields as the first MCS indication field may include:
determining, by the network device, according to the multiple slot locations of the re-transmitted HARQ-ACK codebook and the slot location in which the terminal receives the DCI, values of respective first parameters corresponding to each MCS indication field in the multiple MCS indication fields;
determining, by the network device, according to the values of respective first parameters corresponding to each MCS indication field, respective index values of each MCS indication field; and
determining, by the network device, the multiple MCS indication fields corresponding to respective index values as the first MCS indication field.

In some embodiments, respective index values of each MCS indication field in the first MCS indication field are the same.

In some embodiments, the determining, by the network device, according to one or more slot locations of a re-transmitted HARQ-ACK codebook, the first MCS indication field may include:
determining, by the network device, according to one or more slot locations of a re-transmitted HARQ-ACK codebook and the slot location in which the terminal receives the DCI, the value of the first parameter;
determining, by the network device, according to the value of the first parameter, a first index value; and
determining, by the network device, one or more MCS indication fields as the first MCS indication field, and configuring an index value of each of the one or more MCS indication fields as the first index value.

In some embodiments, subsequent to the sending, by the network device, the DCI to the terminal, the method further includes:
receiving, by the network device, the HARQ-ACK codebook re-transmitted by the terminal at a first slot location, wherein the first slot location is determined by a slot location in which the terminal receives the DCI and a value indicated by timing information included in the DCI.

In some embodiments, subsequent to the sending, by the network device, the DCI to the terminal, the method further includes:
sending, by the network device, one or more PDSCHs to a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments, prior to the sending, by the network device, the DCI to the terminal, the method further includes:
sending, by the network device, first configuration information to the terminal, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

It should be noted that the information processing method on the network device side and the information processing method on the terminal side in the embodiments of the present disclosure are based on the same inventive concept. The embodiments on either side can refer to each other and can achieve the same or similar technical effect. To avoid repetition, the technical effect will not be repeated here.

Embodiments of the present disclosure may be a base station, which may include multiple cells providing services to terminals. Depending on the specific application, a base station may also be referred to as an access point, or may be a device in an access network that communicates with wireless terminal devices over the air interface through one or more sectors, or may be referred to by other names. The network device may be used to convert received air frames into Internet Protocol (IP) packets, acting as a router between the wireless terminal device and the rest of the access network, which may include an Internet Protocol (IP) communications network. The network device may also coordinate the management of air interface attributes. For example, the network devices involved in the embodiments of the present disclosure may be Base Transceiver Stations (BTSs) in the Global System for Mobile communications (GSM) or Code Division Multiple Access (CDMA), NodeBs in Wideband Code Division Multiple Access (WCDMA), evolutionary NodeBs (eNBs or e-NodeBs) in the Long Term Evolution (LTE) system, 5G base stations (gNBs) in the next generation 5G network architecture, home evolved NodeBs (HeNBs), relay nodes, femtos, pico base stations, etc., and are not limited in the embodiments of the present disclosure. In some network structures, the network devices may include Centralized Unit (CU) nodes and Distributed Unit (DU) nodes, and the centralized unit and the distributed unit may also be geographically separated.

The information processing methods disclosed herein will be described below with reference to specific embodiments.

**Embodiment 1:** The value of the parameter L is calculated using the MCS indication field corresponding to the first cell (or the downlink cell with the smallest cell index value).

Step 1: A terminal receives first configuration information of the network device, which includes at least one of the following:
First indication information (i.e., Configuration 1): whether the multi-cell scheduling signaling DCI includes the HARQ-ACK codebook re-transmission indicator, which can be recorded as: pdsch-HARQ-ACK-Retx1_X.

For example, the network device configures pdsch-HARQ-ACK-Retx1_X to the terminal. Configuration 1 indicates that the HARQ-ACK codebook re-transmission indicator is included in the multi-cell scheduling signaling DCI. Furthermore, if the HARQ-ACK codebook re-transmission indicator is 1, the terminal believes that the DCI has triggered the HARQ-ACK codebook re-transmission; otherwise, the terminal believes that the DCI has not triggered the HARQ-ACK codebook re-transmission. Alternatively, if the HARQ-ACK codebook re-transmission indicator is 1, the terminal believes that the DCI has not triggered the HARQ-ACK codebook re-transmission; otherwise, the terminal believes that the DCI has triggered the HARQ-ACK codebook re-transmission. The embodiments of the present disclosure are not limited to this.

It should be noted that the configuration of PDSCH-HARQ-ACK-Retx1_X can be configured based on the first cell group (or cell set) of multi-cell scheduling, that is, the PDSCH-HARQ-ACK-Retx1_X is applied to a first cell group, and the scheduling signaling belonging to the first cell group all uses a PDSCH-HARQ-ACK-Retx1_X configuration parameter. For different first cell groups, PDSCH-HARQ-ACK-Retx1_X is configured independently and separately. Of course, the configuration of PDSCH-HARQ-ACK-Retx1_X can also be configured based on the serving cell group, where a serving cell group includes one or more cell sets.

Second indication information (i.e., Configuration 2): When the HARQ-ACK codebook re-transmission indicator indicates HARQ-ACK codebook re-transmission, Configuration 2 is used to indicate whether one or more cells support for PDSCH transmission.

For example, on the terminal side, if a DCI triggers HARQ-ACK re-transmission, the terminal determines whether there is PDSCH transmission based on Configuration 2 sent by the network device. For example, if HARQ-RetX-withPDSCH is configured on the network device side, it is considered that the terminal is receiving PDSCH according to the scheduling signaling indication when performing HARQ-ACK codebook re-transmission.

Step 2: The terminal receives the multi-cell scheduling signaling DCI from the network device and determines the HARQ-ACK codebook that needs to be re-transmitted.

When the terminal receives multi-cell scheduling signaling DCI in slot n and indicates re-transmission of the HARQ ACK codebook (i.e., the HARQ-ACK re-transmission indicator is 1), the terminal can use the following methods to determine the value of parameter L used to calculate the "slot location m of the re-transmitted HARQ-ACK codebook": use the MCS indication field corresponding to the first cell (or the downlink cell with the smallest cell index value) to determine the value of parameter L. Among them, MCS-index = 0 corresponds to L = -7; MCS-index = 1 corresponds to L = -6; MCS-index = 2 corresponds to L = -5; and so on, up to MCS-index = 31 corresponds to L = 24.

The calculation method of the slot location m of the re-transmitted HARQ-ACK codebook is: m=n-L; where n is the slot location in which the terminal receives the DCI.

The MCS indication field corresponding to the first cell (or the downlink cell with the smallest cell index value) includes the following two optional solutions.

Solution A: The MCS indication field corresponding to the first cell among the scheduled cells (or the downlink cell with the smallest cell index value).

Solution B: Configure the MCS indication field corresponding to the first cell in the first cell group that can be scheduled by DCI (or the downlink cell with the smallest cell index value).

**Table 1**

| First cell group configuration | DCI scheduling signaling | Solution A | Solution B |
|---|---|---|---|
| Cell -1 | No scheduling | | MCS indication field of Cell-1 transport block 1 |
| Cell -2 | Scheduling | MCS indication field of Cell-2 transport block 1 | |
| Cell -3 | Scheduling | | |
| Cell -4 | No scheduling | | |

As shown in Table 1, four cells are configured in the first cell group, and DCI only schedules cell-2 and cell-3.

For solution A: select the MCS indication field of transport block 1 of the first scheduled cell (cell-2) and calculate the value of parameter L.

For solution B: select the MCS indication field of transport block 1 of the first cell (cell-1) in the first cell group and calculate the value of parameter L.

Furthermore, the use of solution A and solution B depends on the indication method of the scheduled cell.

For example, add an information field in the DCI to indicate the scheduled cell and adopt solution A.

On the other hand, use existing fields (such as frequency domain information indication) in DCI for implicit indication and adopt solution B.

Furthermore, when the HARQ-ACK re-transmission indicator indicates 1, the terminal receives PDSCHs from one or more scheduled cells. The PDSCH-receivable cells are those cells excluding the cell(s) used to calculate the value of parameter L from the scheduled cells. For example, referring to Table 1, for solution A, the terminal only receives PDSCH data from cell-3 (cell-2 is considered to be scheduled, but no PDSCH is transmitted; its corresponding MCS indication field is used to calculate the value of parameter L). For solution B, the terminal can receive PDSCH data from both cell-2 and cell-3 (cell-1 is not scheduled; its corresponding MCS indication field is used to calculate the value of parameter L).

It should be noted that when the network device instructs the terminal to perform both HARQ-ACK codebook re-transmission and PDSCH reception, there are three timing methods to determine the feedback timing of HARQ-ACK for PDSCH as below.

Timing method 1: The HARQ-ACK timing for receiving PDSCH feedback is determined in the same way as the timing for HARQ-ACK codebook re-transmission, which is n+k.

Here, n is the slot location of the DCI reception, and k is the value indicated by the timing information in the DCI, namely, the timing value k1 (PDSCH-to-HARQ_feedback timing indicator) indicated by the DCI. Considering that the terminal requires a certain amount of time to receive the PDSCH, the timing value k1 indicated by the network device may satisfy the PDSCH reception processing time requirement. Specifically, the duration between the end symbol of the PDSCH and the first symbol of the Physical Uplink Control Channel (PUCCH) carrying the re-transmitted HARQ-ACK codebook is greater than or equal to the PDSCH reception processing time.

Timing method 2: The feedback HARQ-ACK timing of receiving PDSCH is determined in the same way as the timing of HARQ-ACK codebook re-transmission, which is n0+k.

Here, n0 is the uplink slot corresponding to the PDSCH reception, and k is the DCI-indicated timing value k1 (PDSCH-to-HARQ_feedback timing indicator). Considering that PDSCH reception requires a certain amount of time for the terminal, the timing value k1 indicated by the network equipment needs to satisfy the PDSCH reception processing time requirement. Specifically, the duration between the end symbol of the PDSCH and the first symbol of the PUCCH carrying the re-transmitted HARQ-ACK codebook is greater than or equal to the PDSCH reception processing time.

Timing method 3: The feedback HARQ-ACK timing of receiving PDSCH is determined in a different way from the timing of HARQ-ACK codebook re-transmission.

For example, as for the feedback HARQ-ACK timing of receiving PDSCH, its calculation method is n0+k.

As for the feedback HARQ-ACK timing of the re-transmitted HARQ-ACK codebook is calculated as n+k.

**Embodiment 2:** The value of the parameter L is calculated using the MCS indication field corresponding to the last cell (or the downlink cell with the largest cell index value).

Step 1: The terminal receives first configuration information of the network device.

This step is the same as step 1 of Example 1 and will not be described again here to avoid repetition.

Step 2: The terminal receives the multi-cell scheduling signaling DCI from the network device and determines the HARQ-ACK codebook that needs to be re-transmitted.

When the terminal receives multi-cell scheduling signaling DCI in slot n and indicates re-transmission of the HARQ ACK codebook (i.e., the HARQ-ACK re-transmission indicator is 1), the terminal can use the following methods to determine the value of parameter L used to calculate the "slot location(s) m of the re-transmitted HARQ-ACK codebook": use the MCS indication field corresponding to the last cell (or the downlink cell with the largest cell index value) to determine the value of parameter L. Among them, MCS-index = 0 corresponds to L = -7; MCS-index = 1 corresponds to L = -6; MCS-index = 2 corresponds to L = -5; and so on, up to MCS-index = 31 corresponds to L = 24.

The calculation method of the slot location(s) m of the re-transmitted HARQ-ACK codebook is: m=n-L, where n is the slot location in which the terminal receives the DCI.

The MCS indication field corresponding to the last cell (or the downlink cell with the largest cell index value) includes the following two optional methods.

Solution A: The MCS indication field corresponding to the last cell (or the downlink cell with the largest cell index value) among the scheduled cells.

Solution B: Configure the MCS indication field corresponding to the last cell (or the downlink cell with the largest cell index value) in the first cell group that can be scheduled by DCI.

**Table 2**

| First cell group configuration | DCI scheduling signaling | Solution A | Solution B |
|---|---|---|---|
| Cell -1 | No scheduling | | |
| Cell -2 | Scheduling | | |
| Cell -3 | Scheduling | MCS indication field of Cell-3 transport block 1 | |
| Cell -4 | No scheduling | | MCS indication field of Cell-4 transport block 1 |

As shown in Table 2, four cells are configured in the first cell group, and DCI only schedules cell-2 and cell-3.

For solution A: select the MCS indication field of transport block 1 of the last scheduled cell (cell-3) and calculate the value of parameter L.

For solution B: select the MCS indication field of transport block 1 of the last cell (cell-4) in the first cell group and calculate the value of parameter L.

Furthermore, the use of solution A and solution B depends on the indication method of the scheduled cell.

For example, add an information field in the DCI to indicate the scheduled cell and adopt solution A.

On the other hand, use existing fields (such as frequency domain information indication) in DCI for implicit indication and adopt solution B.

Furthermore, when the HARQ-ACK re-transmission indicator indicates 1, the terminal receives PDSCHs from one or more scheduled cells. The PDSCH-receivable cells are those cells excluding the cell(s) used to calculate the value of parameter L from the scheduled cells. For example, referring to Table 2, for solution A, the terminal only receives PDSCH data from cell-2 (cell-3 is considered to be scheduled, but no PDSCH is transmitted; its corresponding MCS indication field is used to calculate the value of parameter L). For solution B, the terminal can receive PDSCH data from both cell-2 and cell-3 (cell-4 is not scheduled; its corresponding MCS indication field is used to calculate the value of parameter L).

It should be noted that when the network device instructs the terminal to perform both HARQ-ACK codebook re-transmission and PDSCH reception, the methods for determining the feedback timing of HARQ-ACK for PDSCH is the same as that in **Embodiment 1** and will not be repeated here to avoid repetition.

**Embodiment 3:** Calculating the cumulative value of parameter L using the MCS indication fields corresponding to multiple cells.

Step 1: The terminal receives first configuration information of the network device.

This step is the same as step 1 of **Example 1** and will not be described again here to avoid repetition.

Step 2: The terminal receives the multi-cell scheduling signaling DCI from the network device and determines the HARQ-ACK codebook that needs to be re-transmitted.

When the terminal receives multi-cell scheduling signaling DCI in slot n and indicates re-transmission of the HARQ ACK codebook (i.e., the HARQ-ACK re-transmission indicator is 1), the terminal can use the following methods to determine the value of parameter L used to calculate "slot location(s) m of the re-transmitted HARQ-ACK codebook": use the MCS indication fields of multiple cells to determine the value of parameter L: L = L1 + L2 + ... + Ln. Here, L1 is the value of parameter L calculated based on the MCS indication field of the first cell in the multiple cells, L2 is the value of parameter L calculated based on the MCS indication field of the second cell in the multiple cells, and so on.

Among them, MCS-index = 0 corresponds to L = -7; MCS-index = 1 corresponds to L = -6; MCS-index = 2 corresponds to L = -5; and so on, up to MCS-index = 31 corresponds to L = 24.

The calculation method of the slot location(s) m of the re-transmitted HARQ-ACK codebook is: m=n-L, where n is the slot location in which the terminal receives the DCI.

The MCS indication fields corresponding to the above multiple cells include the following two optional methods.

Solution A: The MCS indication fields of multiple cells in the scheduled cell.

Solution B: Configure the MCS indication fields of multiple cells that are not scheduled in the first cell group that can be scheduled by DCI.

**Table 3**

| First cell group configuration | DCI scheduling signaling | Solution A | Solution B |
|---|---|---|---|
| Cell -1 | No scheduling (L=-7) | | MCS indication field of Cell-1 transport block 1 |
| Cell -2 | Scheduling (L=24) | MCS indication of Cell-2 transport block 1 | |
| Cell -3 | Scheduling (L=1) | MCS indication field of Cell-3 transport block 1 | |
| Cell -4 | No scheduling (L=-1) | | MCS indication field of Cell-4 transport block 1 |

As shown in Table 3, four cells are configured in the first cell group, and the DCI only schedules cell-2 and cell-3. Accordingly, the values of the parameter L corresponding to the index value of the MCS indication field corresponding to each cell are: Cell -1: L = -7; Cell -2: L = 24; Cell -3: L = 1; Cell -4: L = -1.

For solution A: select the MCS indication fields of transport block 1 of multiple scheduled cells (cell-3, cell-2) and calculate the cumulative value of parameter L: L = L2 + L3 = 24 + 1 = 25.

For solution B: select the MCS indication fields of multiple transmission blocks 1 of cells that are not scheduled (cell-4, cell-1), and calculate the cumulative value of parameter L: L = L1 + L4 = -1 - 7 = -8.

In this embodiment **(Embodiment 3),** the MCS indication fields of multiple cells are used to cumulatively calculate the value of the parameter L, which can expand the range of the re-transmission HARQ-ACK codebook and improve the flexibility of scheduling.

Furthermore, the use of solution A and solution B depends on the indication method of the scheduled cell.

For example, add an information field in the DCI to indicate the scheduled cell and adopt solution A.

On the other hand, use existing fields (such as frequency domain information indication) in DCI for implicit indication and adopt solution B.

Furthermore, when the HARQ-ACK re-transmission indicator indicates 1, when the above solution A is adopted, the network device does not transmit the PDSCH; and when the above solution B is adopted, the network device can transmit the PDSCH.

It should be noted that when the network device instructs the terminal to perform both HARQ-ACK codebook re-transmission and PDSCH reception, the methods for determining the feedback timing of HARQ-ACK for PDSCH is the same as that in **Embodiment 1** and will not be repeated here to avoid repetition.

The above embodiments have introduced the information processing methods disclosed herein. The following embodiments will further illustrate the corresponding apparatuses, terminals, and network devices in conjunction with the accompanying drawings.

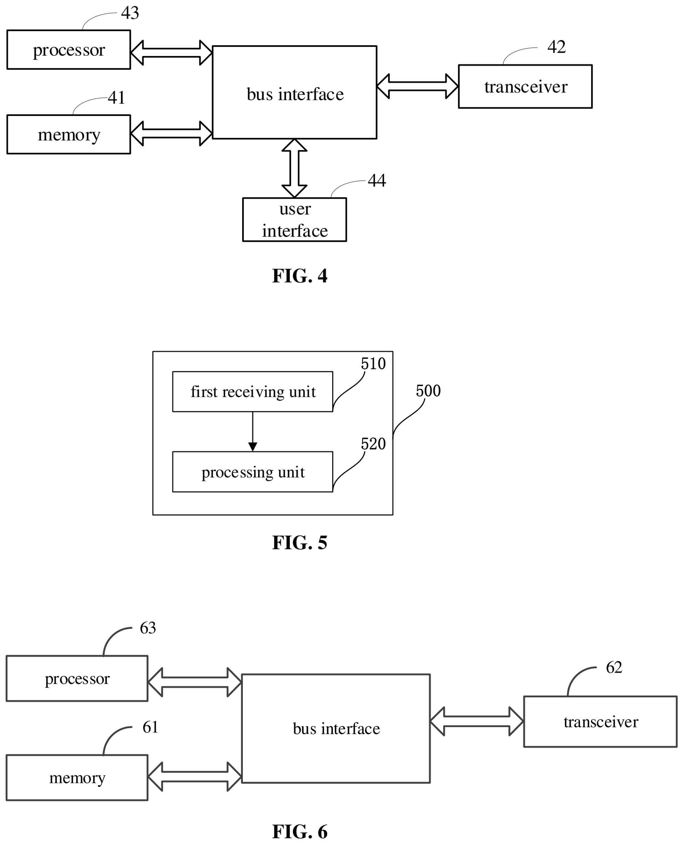

As shown in FIG. 4, an embodiment of the present disclosure provides an information processing apparatus, including a memory 41, a transceiver 42, and a processor 43. The memory 41 is used to store computer programs, and the transceiver 42 is used to send and receive data under the control of the processor 43. For example, the transceiver 42 is used to receive and send data under the control of the processor 43, and the processor 43 is used to read the computer program in the memory 41 and perform the following operations:
receiving DCI sent by a network device, wherein the DCI schedules at least one downlink cell in a first cell group;
determining one or more slot locations of a re-transmitted HARQ-ACK codebook according to a first MCS indication field, wherein the first MCS indication field comprises one or more MCS indication fields included in the DCI, and one MCS indication field corresponds to one downlink cell in the first cell group.

In some embodiments, the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

In some embodiments, the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

In some embodiments, the processor 43 is configured to read the computer program in the memory 41 and perform the following operations:
determining, according to one MCS indication field in the first MCS indication field, one slot location of the re-transmitted HARQ-ACK codebook; or,
determining, according to multiple MCS indication fields in the first MCS indication field, one slot location of the re-transmitted HARQ-ACK codebook; or,
determining, according to multiple MCS indication fields in the first MCS indication field, multiple slot locations of the re-transmitted HARQ-ACK codebook, wherein one MCS indication field of the multiple MCS indication fields is used to determine one slot location of the multiple slot locations.

In some embodiments, the processor 43 is configured to read the computer program in the memory 41 and perform the following operations:
determining, according to an index value of one MCS indication field in the first MCS indication field, a value of a first parameter; and
determining, according to the value of the first parameter and the slot location in which the terminal receives the DCI, the one slot location of the re-transmitted HARQ-ACK codebook.

In some embodiments, the processor 43 is configured to read the computer program in the memory 41 and perform the following operations:
determining, according to respective index values of each MCS indication field in the first MCS indication field, values of respective first parameters corresponding to each MCS indication field; and
determining, according to a sum of the values of the respective first parameters corresponding to each MCS indication field of the multiple MCS indication fields in the first MCS indication field and the slot location in which the terminal receives the DCI, the one slot location of the re-transmitted HARQ-ACK codebook.

In some embodiments, the processor 43 is configured to read the computer program in the memory 41 and perform the following operations:
determining, according to respective index values of each MCS indication field in the first MCS indication field, values of respective first parameters corresponding to each MCS indication field; and
determining, according to the values of respective first parameters corresponding to each MCS indication field and the slot location in which the terminal receives the DCI, the multiple slot locations of the re-transmitted HARQ-ACK codebook.

In some embodiments, respective index values of each MCS indication field in the first MCS indication field are the same.

In some embodiments, the processor 43 is configured to read the computer program in the memory 41 and perform the following operations:
determining, according to an index value of any one MCS indication field in the first MCS indication field, a value of the first parameter; and
determining, according to the value of the first parameter and the slot location in which the terminal receives the DCI, one slot location of the re-transmitted HARQ-ACK codebook.

In some embodiments, the processor 43 is configured to read the computer program in the memory 41 and perform the following operations:
splicing the re-transmitted HARQ-ACK codebooks according to an increasing or decreasing order of the one or more slot locations;
re-transmitting the spliced HARQ-ACK codebook at a first slot location, wherein the first slot location is determined by a slot location in which the terminal receives the DCI and a value indicated by timing information included in the DCI.

In some embodiments, the processor 43 is configured to read the computer program in the memory 41 and perform the following operations:
receiving one or more PDSCHs from a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments, the processor 43 is configured to read the computer program in the memory 41 and perform the following operations:
receiving, by the terminal, first configuration information sent by the network device, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

In FIG. 4, the bus architecture may include any number of interconnected buses and bridges, specifically various circuits of one or more processors represented by processor 43 and memory represented by memory 41. The bus architecture may also link together various other circuits such as peripheral devices, voltage regulators, and power management circuits, which are well known in the art and are therefore not further described herein. The bus interface provides an interface. The transceiver 42 may be a plurality of components, i.e., a transmitter and a receiver, providing a unit for communicating with various other devices on a transmission medium, such as a wireless channel, a wired channel, an optical cable, and the like. For different user devices, the user interface 44 may also be an interface capable of connecting external or internal devices as required, and the connected devices include but are not limited to a keypad, a display, a speaker, a microphone, a joystick, and the like.

The processor 43 is responsible for managing the bus architecture and general processing, and the memory 41 can store data used by the processor 43 when performing operations.

In some embodiments, the processor 43 may be a Central Processing Unit (CPU), an Application Specific Integrated Circuit (ASIC), a Field Programmable Gate Array (FPGA), or a Complex Programmable Logic Device (CPLD). The processor may also adopt a multi-core architecture.

Any of the methods provided by the embodiments of the present disclosure according to the obtained executable instructions. The processor and the memory can also be arranged physically independently and separately.

It should be noted here that the above-mentioned device provided by the embodiment of the present disclosure can implement all the method steps implemented by the above-mentioned terminal-side information processing method embodiment, and can achieve the same or similar technical effect. The parts and beneficial effects of this embodiment that are the same as the method embodiment will not be described in detail here.

As shown in FIG. 5, an embodiment of the present disclosure provides a terminal 500, including:
a first receiving unit 510, configured to receive DCI sent by a network device, wherein the DCI schedules at least one downlink cell in a first cell group;
a processing unit 520, configured to determine one or more slot locations of a re-transmitted HARQ-ACK codebook according to a first MCS indication field, wherein the first MCS indication field comprises one or more MCS indication fields included in the DCI, and one MCS indication field corresponds to one downlink cell in the first cell group.

In some embodiments, the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

In some embodiments, the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

In some embodiments, the processing unit 520 is further configured to:
determine, according to one MCS indication field in the first MCS indication field, one slot location of the re-transmitted HARQ-ACK codebook; or,
determine, according to multiple MCS indication fields in the first MCS indication field, one slot location of the re-transmitted HARQ-ACK codebook; or,
determine, according to multiple MCS indication fields in the first MCS indication field, multiple slot locations of the re-transmitted HARQ-ACK codebook, wherein one MCS indication field of the multiple MCS indication fields is used to determine one slot location of the multiple slot locations.

In some embodiments, the processing unit 520 is further configured to:
determine, according to an index value of one MCS indication field in the first MCS indication field, a value of a first parameter; and
determine, according to the value of the first parameter and the slot location in which the terminal receives the DCI, the one slot location of the re-transmitted HARQ-ACK codebook.

In some embodiments, the processing unit 520 is further configured to:
determine, according to respective index values of each MCS indication field in the first MCS indication field, values of respective first parameters corresponding to each MCS indication field; and
determine, according to a sum of the values of the respective first parameters corresponding to each MCS indication field of the multiple MCS indication fields in the first MCS indication field and the slot location in which the terminal receives the DCI, the one slot location of the re-transmitted HARQ-ACK codebook.

In some embodiments, the processing unit 520 is further configured to:
determine, according to respective index values of each MCS indication field in the first MCS indication field, values of respective first parameters corresponding to each MCS indication field; and
determine, according to the values of respective first parameters corresponding to each MCS indication field and the slot location in which the terminal receives the DCI, the multiple slot locations of the re-transmitted HARQ-ACK codebook.

In some embodiments, respective index values of each MCS indication field in the first MCS indication field are the same.

In some embodiments, the processing unit 520 is further configured to:
determine, according to an index value of any one MCS indication field in the first MCS indication field, a value of the first parameter; and
determine, according to the value of the first parameter and the slot location in which the terminal receives the DCI, one slot location of the re-transmitted HARQ-ACK codebook.

In some embodiments, the terminal 500 further includes:
a splicing unit, configured to splice the re-transmitted HARQ-ACK codebooks according to an increasing or decreasing order of the one or more slot locations;
A re-transmission unit, configured to re-transmit the spliced HARQ-ACK codebook at a first slot location, wherein the first slot location is determined by a slot location in which the terminal receives the DCI and a value indicated by timing information included in the DCI.

In some embodiments, the terminal 500 further includes:
a second receiving unit configured to receive one or more PDSCHs from a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments, the terminal 500 further includes:
a third receiving unit configured to receive first configuration information sent by the network device, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

It should be noted here that the above-mentioned terminals provided in the embodiments of the present disclosure can implement all the method steps implemented in the above-mentioned terminal-side information processing method embodiments, and can achieve the same or similar technical effect. The parts and beneficial effects of this embodiment that are the same as the method embodiments will not be described in detail here.

To better achieve the above objectives, as shown in FIG. 6, an embodiment of the present disclosure provides an information processing device, including a memory 61, a transceiver 62, and a processor 63. The memory 61 is used to store computer programs, and the transceiver 62 is used to send and receive data under the control of the processor 63. For example, the transceiver 62 is used to receive and send data under the control of the processor 63, and the processor 63 is used to read the computer program in the memory 61 and perform the following operations:
determining, according to one or more slot locations of a re-transmitted HARQ-ACK codebook, a first MCS indication field;
sending DCI to a terminal, wherein the DCI schedules at least one downlink cell in a first cell group, wherein the DCI is used to schedule at least one downlink cell in the first cell group, and the DCI includes therein at least one MCS indication field,
wherein the first MCS indication field includes one or more MCS indication fields included in the DCI, and one MCS indication field corresponds to one downlink cell in the first cell group.

In some embodiments, the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

In some embodiments, the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

In some embodiments, the processor 63 is configured to read the computer program in the memory 61 and perform the following operations:
determining, according to one slot location of the re-transmitted HARQ-ACK codebook, one MCS indication field, and determining the one MCS indication field as the first MCS indication field; or,
determining, according to one slot location of the re-transmitted HARQ-ACK codebook, multiple MCS indication fields, and determining the multiple MCS indication fields as the first MCS indication field; or,
determining, according to multiple slot locations of the re-transmitted HARQ-ACK codebook, multiple MCS indication fields, and determining the multiple MCS indication fields as the first MCS indication field, wherein one MCS indication field of the multiple MCS indication fields is used to determine one slot location of the multiple slot locations.

In some embodiments, the processor 63 is configured to read the computer program in the memory 61 and perform the following operations:
determining, according to the one slot location of the re-transmitted HARQ-ACK codebook and the slot location in which the terminal receives the DCI, a value of a first parameter;
determining, according to the value of the first parameter, an index value of one MCS indication field; and
determining the one MCS indication field corresponding to the index value as the first MCS indication field.

In some embodiments, the processor 63 is configured to read the computer program in the memory 61 and perform the following operations:
determining, according to the one slot location of the re-transmitted HARQ-ACK codebook and the slot location in which the terminal receives the DCI, a sum of the values of the respective first parameters corresponding to the multiple MCS indication fields;
determining, according to the sum of the values of the respective first parameters corresponding to the multiple MCS indication fields, respective index values of each MCS indication field in the multiple MCS indication fields; and
determining the multiple MCS indication fields corresponding to respective index values as the first MCS indication field.

In some embodiments, the processor 63 is configured to read the computer program in the memory 61 and perform the following operations:
determining, according to the multiple slot locations of the re-transmitted HARQ-ACK codebook and the slot location in which the terminal receives the DCI, values of respective first parameters corresponding to each MCS indication field in the multiple MCS indication fields;
determining, according to the values of respective first parameters corresponding to each MCS indication field, respective index values of each MCS indication field; and
determining the multiple MCS indication fields corresponding to respective index values as the first MCS indication field.

In some embodiments, respective index values of each MCS indication field in the first MCS indication field are the same.

In some embodiments, the processor 63 is configured to read the computer program in the memory 61 and perform the following operations:
determining according to one or more slot locations of a re-transmitted HARQ-ACK codebook and the slot location in which the terminal receives the DCI, the value of the first parameter;
determining according to the value of the first parameter, a first index value; and
determining one or more MCS indication fields as the first MCS indication field, and configuring an index value of each of the one or more MCS indication fields as the first index value.

In some embodiments, the processor 63 is configured to read the computer program in the memory 61 and perform the following operations:
receiving the HARQ-ACK codebook re-transmitted by the terminal at a first slot location, wherein the first slot location is determined by a slot location in which the terminal receives the DCI and a value indicated by timing information included in the DCI.

In some embodiments, the processor 63 is configured to read the computer program in the memory 61 and perform the following operations:
sending one or more PDSCHs to a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments, the processor 63 is configured to read the computer program in the memory 61 and perform the following operations:
sending first configuration information to the terminal, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

In FIG. 6, the bus architecture may include any number of interconnected buses and bridges, specifically one or more processors represented by processor 63 and various circuits of memory represented by memory 61. The bus architecture may also link together various other circuits such as peripheral devices, voltage regulators, and power management circuits, which are well known in the art and are therefore not further described herein. The bus interface provides an interface. The transceiver 62 may be a plurality of components, i.e., a transmitter and a receiver, providing a unit for communicating with various other devices over a transmission medium, such as a wireless channel, a wired channel, an optical cable, or the like. The processor 63 is responsible for managing the bus architecture and general processing, and the memory 61 may store data used by the processor 63 when performing operations.

The processor 63 may be a CPU, an ASIC, an FPGA or a CPLD, and the processor may also adopt a multi-core architecture.

It should be noted here that the above-mentioned devices provided in the embodiments of the present disclosure can implement all the method steps implemented in the above-mentioned network device side information processing method embodiments, and can achieve the same or similar technical effect. The parts and beneficial effects of this embodiment that are the same as the method embodiments will not be described in detail here.

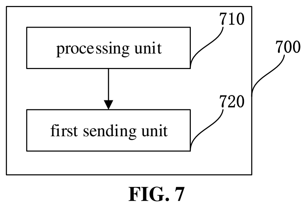

As shown in FIG. 7, an embodiment of the present disclosure provides a network device 700, including:
a processing unit 710, configured to determine, according to one or more slot locations of a re-transmitted HARQ-ACK codebook, a first MCS indication field;
a first sending unit 720, configured to send DCI to a terminal, wherein the DCI schedules at least one downlink cell in a first cell group, wherein the DCI is used to schedule at least one downlink cell in the first cell group, and the DCI includes therein at least one MCS indication field,
wherein the first MCS indication field includes one or more MCS indication fields included in the DCI, and one MCS indication field corresponds to one downlink cell in the first cell group.

In some embodiments, the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

In some embodiments, the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

In some embodiments, the processing unit 710 is further configured to:
determine, according to one slot location of the re-transmitted HARQ-ACK codebook, one MCS indication field, and determine the one MCS indication field as the first MCS indication field; or,
determine, according to one slot location of the re-transmitted HARQ-ACK codebook, multiple MCS indication fields, and determine the multiple MCS indication fields as the first MCS indication field; or,
determine, according to multiple slot locations of the re-transmitted HARQ-ACK codebook, multiple MCS indication fields, and determine the multiple MCS indication fields as the first MCS indication field, wherein one MCS indication field of the multiple MCS indication fields is used to determine one slot location of the multiple slot locations.

In some embodiments, the processing unit 710 is further configured to:
determine, according to the one slot location of the re-transmitted HARQ-ACK codebook and the slot location in which the terminal receives the DCI, a value of a first parameter;
determine, according to the value of the first parameter, an index value of one MCS indication field; and
determine the one MCS indication field corresponding to the index value as the first MCS indication field.

In some embodiments, the processing unit 710 is further configured to:
determine, according to the one slot location of the re-transmitted HARQ-ACK codebook and the slot location in which the terminal receives the DCI, a sum of the values of the respective first parameters corresponding to the multiple MCS indication fields;
determine, according to the sum of the values of the respective first parameters corresponding to the multiple MCS indication fields, respective index values of each MCS indication field in the multiple MCS indication fields; and
determine, the multiple MCS indication fields corresponding to respective index values as the first MCS indication field.

In some embodiments, the processing unit 710 is further configured to:
determine, according to the multiple slot locations of the re-transmitted HARQ-ACK codebook and the slot location in which the terminal receives the DCI, values of respective first parameters corresponding to each MCS indication field in the multiple MCS indication fields;
determine, according to the values of respective first parameters corresponding to each MCS indication field, respective index values of each MCS indication field; and
determine, the multiple MCS indication fields corresponding to respective index values as the first MCS indication field.

In some embodiments, respective index values of each MCS indication field in the first MCS indication field are the same.

In some embodiments, the processing unit 710 is further configured to:
determine, according to one or more slot locations of a re-transmitted HARQ-ACK codebook and the slot location in which the terminal receives the DCI, the value of the first parameter;
determine, according to the value of the first parameter, a first index value; and
determine, one or more MCS indication fields as the first MCS indication field, and configure an index value of each of the one or more MCS indication fields as the first index value.

In some embodiments, the network device 700 further includes:
a receiving unit, configured to receive the HARQ-ACK codebook re-transmitted by the terminal at a first slot location, wherein the first slot location is determined by a slot location in which the terminal receives the DCI and a value indicated by timing information included in the DCI.

In some embodiments, the network device 700 further includes:
a second sending unit configured to send one or more PDSCHs to a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

In some embodiments, the network device 700 further includes:
a third sending unit configured to send first configuration information to the terminal, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

It should be noted here that the above-mentioned network devices provided in the embodiments of the present disclosure can implement all the method steps implemented in the above-mentioned network device side information processing method embodiments, and can achieve the same or similar technical effect. The parts and beneficial effects of this embodiment that are the same as the method embodiments will not be described in detail here.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented as a software functional unit and sold or used as an independent product, it can be stored in a processor-readable storage medium. Based on this understanding, the technical solution of the present disclosure, or the portion that contributes to the relevant technology, or all or part of the technical solution, can be embodied in the form of a software product. This computer software product is stored in a storage medium and includes several instructions for causing a computer device (which can be a personal computer, server, or network device, etc.) or a processor to execute all or part of the steps of the method described in each embodiment of the present disclosure. The aforementioned storage medium includes various media that can store program code, such as a USB flash drive, a mobile hard drive, a Read-Only Memory (ROM), a Random Access Memory (RAM), a magnetic disk, or an optical disk.

An embodiment of the present disclosure also provides a processor-readable storage medium, which stores a computer program. The computer program is used to enable the processor to execute the steps of the above-mentioned terminal-side information processing methods, or the computer program is used to enable the processor to execute the steps of the above-mentioned network device-side information processing methods, and can achieve the same or similar technical effect. The parts and beneficial effects of this embodiment that are the same as those of the method embodiments will not be described in detail here.

The processor-readable storage medium can be any available medium or data storage device that can be accessed by the processor, including but not limited to magnetic storage (such as floppy disk, hard disk, magnetic tape, Magneto-Optical disk (MO)), optical storage (such as Compact Disk (CD), Digital Video Disc (DVD), Blue-ray Disc (BD), High-definition Versatile Disc (HVD)), and semiconductor memory (such as Read-Only Memory (ROM), Erasable Programmable Read-Only Memory (EPROM), Electrically Erasable Programmable Read-Only Memory (EEPROM), Nonvolatile memory (NAND FLASH), Solid-State Drive (SSD)), etc.

Those skilled in the art will appreciate that embodiments of the present disclosure may be provided as methods, systems, or computer program products. Thus, the present disclosure may take the form of an entirely hardware embodiment, an entirely software embodiment, or an embodiment combining software and hardware. Furthermore, the present disclosure may take the form of a computer program product implemented on one or more computer-usable storage media (including but not limited to magnetic disk storage and optical storage) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce a device for implementing the functions specified in one or more processes in the flowcharts and/or one or more blocks in the block diagrams.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that it should be understood that the division of the above modules is merely a division of logical functions. In actual implementation, they can be fully or partially integrated into one physical entity, or they can be physically separated. Moreover, these modules can all be implemented in the form of software called by a processing element; or they can all be implemented in the form of hardware; or some modules can be implemented in the form of software called by a processing element, and some modules can be implemented in the form of hardware. For example, the determination module can be a separately established processing element, or it can be integrated into a chip of the above-mentioned device. In addition, it can also be stored in the memory of the above-mentioned device in the form of program code, and called by a processing element of the above-mentioned device to perform the functions of the above-mentioned determination module. The implementation of other modules is similar. In addition, these modules can all or partly be integrated together, or they can be implemented independently. The processing element described here can be an integrated circuit with signal processing capabilities. In the implementation process, each step of the above method or each of the above modules can be completed by the hardware integrated logic circuit in the processor element or by instructions in the form of software.

For example, each module, unit, sub-unit, or sub-module may be one or more integrated circuits configured to implement the above method, such as one or more Application-Specific Integrated Circuits (ASICs), one or more Digital Signal Processors (DSPs), or one or more Field Programmable Gate Arrays (FPGAs). For another example, when a module is implemented by scheduling program code on a processing element, the processing element may be a general-purpose processor, such as a Central Processing Unit (CPU) or other processor capable of calling program code. For another example, these modules may be integrated together and implemented in the form of a System-On-Chip (SOC).

In addition, it should be pointed out that in the apparatus and method of the present invention, it is obvious that each component or each step can be decomposed and/or recombined. These decompositions and / or recombination should be regarded as equivalent schemes of the present invention. Moreover, the steps of performing the above-mentioned series of processing can naturally be performed in chronological order according to the order of description, but it is not necessary to perform them in chronological order, and some steps can be performed in parallel or independently of each other. For those of ordinary skill in the art, it is understandable that all or any steps or components of the method and apparatus of the present invention can be implemented in hardware, firmware, software or a combination thereof in any computing device (including a processor, storage medium, etc.) or a network of computing devices, which can be achieved by those of ordinary skill in the art using their basic programming skills after reading the description of the present invention.

Obviously, those skilled in the art may make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. An information processing method, comprising:
receiving, by a terminal, Downlink Control Signaling (DCI) sent by a network device, wherein the DCI schedules at least one downlink cell in a first cell group;
determining, by the terminal, one or more slot locations of a re-transmitted Hybrid Automatic Repeat reQuest - Acknowledgment (HARQ-ACK) codebook according to a first Modulation and Coding Scheme (MCS) indication field, wherein the first MCS indication field comprises one or more MCS indication fields included in the DCI, and one MCS indication field corresponds to one downlink cell in the first cell group.

2. The information processing method according to claim 1, wherein the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

3. The information processing method according to claim 1, wherein the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

4. The information processing method according to claim 3, wherein the downlink cell that is not scheduled is determined by at least one of the following conditions:
when a resource allocation mode is resource allocation mode 0 and values indicated by respective Frequency Division Resource Allocation (FDRA) fields are all 0, it is determined that there is no downlink cell scheduled;
when the resource allocation mode is resource allocation mode 1 and the values indicated by respective FDRA fields are all 1, it is determined that there is no downlink cell scheduled;
when the resource allocation mode is dynamically switched and the values indicated by respective FDRA fields are all 1 or all 0, it is determined that there is no downlink cell scheduled.

5. The information processing method according to any one of claims 1 to 4, wherein the determining, by the terminal, the one or more slot locations of the re-transmitted HARQ-ACK codebook according to a first MCS indication field comprises:
determining, by the terminal, according to one MCS indication field in the first MCS indication field, one slot location of the re-transmitted HARQ-ACK codebook; or,
determining, by the terminal, according to multiple MCS indication fields in the first MCS indication field, one slot location of the re-transmitted HARQ-ACK codebook; or,
determining, by the terminal, according to multiple MCS indication fields in the first MCS indication field, multiple slot locations of the re-transmitted HARQ-ACK codebook, wherein one MCS indication field of the multiple MCS indication fields is used to determine one slot location of the multiple slot locations.

6. The information processing method according to claim 5, wherein the determining, by the terminal, according to one MCS indication field in the first MCS indication field, the one slot location of the re-transmitted HARQ-ACK codebook comprises:
determining, by the terminal, according to an index value of one MCS indication field in the first MCS indication field, a value of a first parameter; and
determining, by the terminal, according to the value of the first parameter and the slot location in which the terminal receives the DCI, the one slot location of the re-transmitted HARQ-ACK codebook.

7. The information processing method according to claim 5, wherein the determining, by the terminal, according to multiple MCS indication fields in the first MCS indication field, the one slot location of the re-transmitted HARQ-ACK codebook comprises:
determining, by the terminal, according to respective index values of each MCS indication field in the first MCS indication field, values of respective first parameters corresponding to each MCS indication field; and
determining, by the terminal, according to a sum of the values of the respective first parameters corresponding to each MCS indication field of the multiple MCS indication fields in the first MCS indication field and the slot location in which the terminal receives the DCI, the one slot location of the re-transmitted HARQ-ACK codebook.

8. The information processing method according to claim 5, wherein the determining, by the terminal, according to multiple MCS indication fields in the first MCS indication field, the multiple slot locations of the re-transmitted HARQ-ACK codebook comprises:
determining, by the terminal, according to respective index values of each MCS indication field in the first MCS indication field, values of respective first parameters corresponding to each MCS indication field; and
determining, by the terminal, according to the values of respective first parameters corresponding to each MCS indication field and the slot location in which the terminal receives the DCI, the multiple slot locations of the re-transmitted HARQ-ACK codebook.

9. The information processing method according to claim 1, wherein respective index values of each MCS indication field in the first MCS indication field are the same.

10. The information processing method according to claim 9, wherein the determining, by the terminal, the one or more slot locations of the re-transmitted HARQ-ACK codebook according to the first MCS indication field comprises:
determining, by the terminal, according to an index value of any one MCS indication field in the first MCS indication field, a value of the first parameter; and
determining, by the terminal, according to the value of the first parameter and the slot location in which the terminal receives the DCI, one slot location of the re-transmitted HARQ-ACK codebook.

11. The information processing method according to claim 1, wherein subsequent to the determining, by the terminal, the one or more slot locations of the re-transmitted HARQ-ACK codebook according to the first MCS indication field, the method further comprises:
splicing, by the terminal, the re-transmitted HARQ-ACK codebooks according to an increasing or decreasing order of the one or more slot locations;
re-transmitting, by the terminal, the spliced HARQ-ACK codebook at a first slot location, wherein the first slot location is determined by a slot location in which the terminal receives the DCI and a value indicated by timing information included in the DCI.

12. The information processing method according to claim 1, wherein subsequent to the receiving, by the terminal, the DCI sent by the network device, the method further comprises:
receiving, by the terminal, one or more Physical Downlink Shared Channels (PDSCHs) from a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

13. The information processing method according to claim 12, further comprising:
when the network device instructs the terminal to perform both HARQ-ACK codebook re-transmission and PDSCH reception, determining, by the terminal, a feedback HARQ-ACK timing for receiving the PDSCH;
wherein the feedback HARQ-ACK timing of the received PDSCH is the same as a feedback HARQ-ACK timing of the re-transmitted HARQ-ACK codebook; or
the feedback HARQ-ACK timing of the received PDSCH is different from the feedback HARQ-ACK timing of the re-transmitted HARQ-ACK codebook.

14. The information processing method according to claim 13, wherein, when the feedback HARQ-ACK timing of the received PDSCH is the same as the feedback HARQ-ACK timing of the re-transmitted HARQ-ACK codebook, the feedback HARQ-ACK timing of the received PDSCH is n+k or n0+k; and/or
when the feedback HARQ-ACK timing of the received PDSCH is different from the feedback HARQ-ACK timing of the re-transmitted HARQ-ACK codebook, the feedback HARQ-ACK timing of the received PDSCH is n0+k, and the feedback HARQ-ACK timing of the re-transmitted HARQ-ACK codebook is n+k,
where n is the slot location for receiving the DCI, n0 is an uplink slot corresponding to the received PDSCH, and k is a value indicated by the timing information in the DCI.

15. The information processing method according to claim 1 or 12, wherein prior to the receiving, by the terminal, the DCI sent by the network device, the method further comprises:
receiving, by the terminal, first configuration information sent by the network device, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

16. An information processing method, comprising:
determining, by a network device, according to one or more slot locations of a re-transmitted Hybrid Automatic Repeat reQuest - Acknowledgment (HARQ-ACK) codebook, a first Modulation and Coding Scheme (MCS) indication field;
sending, by the network device, Downlink Control Signaling (DCI) to a terminal, wherein the DCI schedules at least one downlink cell in a first cell group, wherein the DCI is used to schedule at least one downlink cell in the first cell group, and the DCI comprises therein at least one MCS indication field,
wherein the first MCS indication field comprises one or more MCS indication fields included in the DCI, and one MCS indication field corresponds to one downlink cell in the first cell group.

17. The information processing method according to claim 16, wherein the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

18. The information processing method according to claim 16, wherein the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

19. The information processing method according to claim 18, wherein the downlink cell that is not scheduled is determined by at least one of the following conditions:
when a resource allocation mode is resource allocation mode 0 and values indicated by respective Frequency Division Resource Allocation (FDRA) fields are all 0, it is determined that there is no downlink cell scheduled;
when the resource allocation mode is resource allocation mode 1 and the values indicated by respective FDRA fields are all 1, it is determined that there is no downlink cell scheduled;
when the resource allocation mode is dynamically switched and the values indicated by respective FDRA fields are all 1 or all 0, it is determined that there is no downlink cell scheduled.

20. The information processing method according to any one of claims 16 to 19, wherein the determining, by the network device, according to one or more slot locations of the re-transmitted HARQ-ACK codebook, the first MCS indication field comprises:
determining, by the network device, according to one slot location of the re-transmitted HARQ-ACK codebook, one MCS indication field, and determining the one MCS indication field as the first MCS indication field; or,
determining, by the network device, according to one slot location of the re-transmitted HARQ-ACK codebook, multiple MCS indication fields, and determining the multiple MCS indication fields as the first MCS indication field; or,
determining, by the network device, according to multiple slot locations of the re-transmitted HARQ-ACK codebook, multiple MCS indication fields, and determining the multiple MCS indication fields as the first MCS indication field, wherein one MCS indication field of the multiple MCS indication fields is used to determine one slot location of the multiple slot locations.

21. The information processing method according to claim 20, wherein the determining, by the network device, according to one slot location of the re-transmitted HARQ-ACK codebook, one MCS indication field, and determining the one MCS indication field as the first MCS indication field comprises:
determining, by the network device, according to the one slot location of the re-transmitted HARQ-ACK codebook and the slot location in which the terminal receives the DCI, a value of a first parameter;
determining, by the network device, according to the value of the first parameter, an index value of one MCS indication field; and
determining, by the network device, the one MCS indication field corresponding to the index value as the first MCS indication field.

22. The information processing method according to claim 20, wherein the determining, by the network device, according to one slot location of the re-transmitted HARQ-ACK codebook, multiple MCS indication fields, and determining the multiple MCS indication fields as the first MCS indication field comprises:
determining, by the network device, according to the one slot location of the re-transmitted HARQ-ACK codebook and the slot location in which the terminal receives the DCI, a sum of the values of the respective first parameters corresponding to the multiple MCS indication fields;
determining, by the network device, according to the sum of the values of the respective first parameters corresponding to the multiple MCS indication fields, respective index values of each MCS indication field in the multiple MCS indication fields; and
determining, by the network device, the multiple MCS indication fields corresponding to respective index values as the first MCS indication field.

23. The information processing method according to claim 20, wherein the determining, by the network device, according to multiple slot locations of the re-transmitted HARQ-ACK codebook, multiple MCS indication fields, and determining the multiple MCS indication fields as the first MCS indication field comprises:
determining, by the network device, according to the multiple slot locations of the re-transmitted HARQ-ACK codebook and the slot location in which the terminal receives the DCI, values of respective first parameters corresponding to each MCS indication field in the multiple MCS indication fields;
determining, by the network device, according to the values of respective first parameters corresponding to each MCS indication field, respective index values of each MCS indication field; and
determining, by the network device, the multiple MCS indication fields corresponding to respective index values as the first MCS indication field.

24. The information processing method according to claim 16, wherein respective index values of each MCS indication field in the first MCS indication field are the same.

25. The information processing method according to claim 24, wherein the determining, by the network device, according to one or more slot locations of a re-transmitted HARQ-ACK codebook, the first MCS indication field comprises:
determining, by the network device, according to one or more slot locations of a re-transmitted HARQ-ACK codebook and the slot location in which the terminal receives the DCI, the value of the first parameter;
determining, by the network device, according to the value of the first parameter, a first index value; and
determining, by the network device, one or more MCS indication fields as the first MCS indication field, and configuring an index value of each of the one or more MCS indication fields as the first index value.

26. The information processing method according to claim 16, wherein subsequent to the sending, by the network device, the DCI to the terminal, the method further comprises:
receiving, by the network device, the HARQ-ACK codebook re-transmitted by the terminal at a first slot location, wherein the first slot location is determined by a slot location in which the terminal receives the DCI and a value indicated by timing information included in the DCI.

27. The information processing method according to claim 16, wherein subsequent to the sending, by the network device, the DCI to the terminal, the method further comprises:
sending, by the network device, one or more Physical Downlink Shared Channels (PDSCHs) to a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

28. The information processing method according to claim 27, further comprising:
when the network device instructs the terminal to perform both HARQ-ACK codebook re-transmission and PDSCH reception, determining, by the network device, a feedback HARQ-ACK timing for receiving the PDSCH;
wherein the feedback HARQ-ACK timing of the received PDSCH is the same as a feedback HARQ-ACK timing of the re-transmitted HARQ-ACK codebook; or
the feedback HARQ-ACK timing of the received PDSCH is different from the feedback HARQ-ACK timing of the re-transmitted HARQ-ACK codebook.

29. The information processing method according to claim 28, wherein, when the feedback HARQ-ACK timing of the received PDSCH is the same as the feedback HARQ-ACK timing of the re-transmitted HARQ-ACK codebook, the feedback HARQ-ACK timing of the received PDSCH is n+k or n0+k; and/or
when the feedback HARQ-ACK timing of the received PDSCH is different from the feedback HARQ-ACK timing of the re-transmitted HARQ-ACK codebook, the feedback HARQ-ACK timing of the received PDSCH is n0+k, and the feedback HARQ-ACK timing of the re-transmitted HARQ-ACK codebook is n+k,
where n is the slot location for receiving the DCI, n0 is an uplink slot corresponding to the received PDSCH, and k is a value indicated by the timing information in the DCI.

30. The information processing method according to claim 16 or 27, wherein prior to the sending, by the network device, the DCI to the terminal, the method further comprises:
sending, by the network device, first configuration information to the terminal, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

31. An information processing apparatus comprising a memory, a transceiver, and a processor;
the memory is used to store a computer program; the transceiver is used to send and receive data under the control of the processor; and the processor is used to read the computer program in the memory and perform the following operations:
receiving Downlink Control Signaling (DCI) sent by a network device, wherein the DCI schedules at least one downlink cell in a first cell group;
determining one or more slot locations of a re-transmitted Hybrid Automatic Repeat reQuest - Acknowledgment (HARQ-ACK) codebook according to a first Modulation and Coding Scheme (MCS) indication field, wherein the first MCS indication field comprises one or more MCS indication fields included in the DCI, and one MCS indication field corresponds to one downlink cell in the first cell group.

32. The information processing apparatus according to claim 31, wherein the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

33. The information processing apparatus according to claim 31, wherein the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

34. The information processing apparatus according to claim 33, wherein the downlink cell that is not scheduled is determined by at least one of the following conditions:
when a resource allocation mode is resource allocation mode 0 and values indicated by respective Frequency Division Resource Allocation (FDRA) fields are all 0, it is determined that there is no downlink cell scheduled;
when the resource allocation mode is resource allocation mode 1 and the values indicated by respective FDRA fields are all 1, it is determined that there is no downlink cell scheduled;
when the resource allocation mode is dynamically switched and the values indicated by respective FDRA fields are all 1 or all 0, it is determined that there is no downlink cell scheduled.

35. The information processing apparatus according to any one of claims 31 to 34, wherein the processor is configured to read the computer program in the memory and perform the following operations:
determining, according to one MCS indication field in the first MCS indication field, one slot location of the re-transmitted HARQ-ACK codebook; or,
determining, according to multiple MCS indication fields in the first MCS indication field, one slot location of the re-transmitted HARQ-ACK codebook; or,
determining, according to multiple MCS indication fields in the first MCS indication field, multiple slot locations of the re-transmitted HARQ-ACK codebook, wherein one MCS indication field of the multiple MCS indication fields is used to determine one slot location of the multiple slot locations.

36. The information processing apparatus according to claim 35, wherein the processor is configured to read the computer program in the memory and perform the following operations:
determining, according to an index value of one MCS indication field in the first MCS indication field, a value of a first parameter; and
determining, according to the value of the first parameter and the slot location in which the terminal receives the DCI, the one slot location of the re-transmitted HARQ-ACK codebook.

37. The information processing apparatus according to claim 35, wherein the processor is configured to read the computer program in the memory and perform the following operations:
determining, according to respective index values of each MCS indication field in the first MCS indication field, values of respective first parameters corresponding to each MCS indication field; and
determining, according to a sum of the values of the respective first parameters corresponding to each MCS indication field of the multiple MCS indication fields in the first MCS indication field and the slot location in which the terminal receives the DCI, the one slot location of the re-transmitted HARQ-ACK codebook.

38. The information processing apparatus according to claim 35, wherein the processor is configured to read the computer program in the memory and perform the following operations:
determining, according to respective index values of each MCS indication field in the first MCS indication field, values of respective first parameters corresponding to each MCS indication field; and
determining, according to the values of respective first parameters corresponding to each MCS indication field and the slot location in which the terminal receives the DCI, the multiple slot locations of the re-transmitted HARQ-ACK codebook.

39. The information processing apparatus according to claim 31, wherein respective index values of each MCS indication field in the first MCS indication field are the same.

40. The information processing apparatus according to claim 39, wherein the processor is configured to read the computer program in the memory and perform the following operations:
determining, according to an index value of any one MCS indication field in the first MCS indication field, a value of the first parameter; and
determining, according to the value of the first parameter and the slot location in which the terminal receives the DCI, one slot location of the re-transmitted HARQ-ACK codebook.

41. The information processing apparatus according to claim 31, wherein the processor is configured to read the computer program in the memory and perform the following operations:
splicing the re-transmitted HARQ-ACK codebooks according to an increasing or decreasing order of the one or more slot locations;
re-transmitting the spliced HARQ-ACK codebook at a first slot location, wherein the first slot location is determined by a slot location in which the terminal receives the DCI and a value indicated by timing information included in the DCI.

42. The information processing apparatus according to claim 31, wherein the processor is configured to read the computer program in the memory and perform the following operations:
receiving one or more Physical Downlink Shared Channels (PDSCHs) from a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

43. The information processing apparatus according to claim 42, wherein the processor is configured to read the computer program in the memory and perform the following operations:
when the network device instructs the terminal to perform both HARQ-ACK codebook re-transmission and PDSCH reception, determining, by the terminal, a feedback HARQ-ACK timing for receiving the PDSCH;
wherein the feedback HARQ-ACK timing of the received PDSCH is the same as a feedback HARQ-ACK timing of the re-transmitted HARQ-ACK codebook; or
the feedback HARQ-ACK timing of the received PDSCH is different from the feedback HARQ-ACK timing of the re-transmitted HARQ-ACK codebook.

44. The information processing apparatus according to claim 43, wherein, when the feedback HARQ-ACK timing of the received PDSCH is the same as the feedback HARQ-ACK timing of the re-transmitted HARQ-ACK codebook, the feedback HARQ-ACK timing of the received PDSCH is n+k or n0+k; and/or
when the feedback HARQ-ACK timing of the received PDSCH is different from the feedback HARQ-ACK timing of the re-transmitted HARQ-ACK codebook, the feedback HARQ-ACK timing of the received PDSCH is n0+k, and the feedback HARQ-ACK timing of the re-transmitted HARQ-ACK codebook is n+k,
where n is the slot location for receiving the DCI, n0 is an uplink slot corresponding to the received PDSCH, and k is a value indicated by the timing information in the DCI.

45. The information processing apparatus according to claim 31 or 42, wherein the processor is configured to read the computer program in the memory and perform the following operations:
receiving, by the terminal, first configuration information sent by the network device, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

46. A terminal comprising:
a first receiving unit configured to receive Downlink Control Signaling (DCI) sent by a network device, wherein the DCI schedules at least one downlink cell in a first cell group;
a processing unit configured to determine one or more slot locations of a re-transmitted Hybrid Automatic Repeat reQuest - Acknowledgment (HARQ-ACK) codebook according to a first Modulation and Coding Scheme (MCS) indication field, wherein the first MCS indication field comprises one or more MCS indication fields included in the DCI, and one MCS indication field corresponds to one downlink cell in the first cell group.

47. The terminal according to claim 46, wherein the first MCS indication field includes at least one of the following:
an MCS indication field corresponding to a first scheduled cell, wherein the first scheduled cell is an earliest downlink cell scheduled by the DCI, or a downlink cell with the smallest cell index value among downlink cells scheduled by the DCI;
an MCS indication field corresponding to a second scheduled cell, wherein the second scheduled cell is a latest downlink cell scheduled by the DCI, or a downlink cell with the largest cell index value among downlink cells scheduled by the DCI;
an MCS indication field corresponding to a first cell, wherein the first cell is a downlink cell with the largest cell index value in the first cell group;
an MCS indication field corresponding to a second cell, wherein the second cell is a downlink cell with the smallest cell index value in the first cell group;
an MCS indication field corresponding to one downlink cell indicated by higher-layer signaling;
an MCS indication field corresponding to one downlink cell indicated by a first indication field included in the DCI.

48. The terminal according to claim 46, wherein the first MCS indication field includes at least one of the following:
one or more MCS indication fields corresponding to third scheduled cells, wherein the third scheduled cells are downlink cells scheduled by the DCI;
one or more MCS indication fields corresponding to third cells, wherein the third cells are downlink cells in the first cell group;
one or more MCS indication fields corresponding to fourth cells, wherein the fourth cells are downlink cells in the first cell group that are not scheduled;
one or more MCS indication fields corresponding to multiple downlink cells indicated by higher-layer signaling;
one or more MCS indication fields corresponding to multiple downlink cells indicated by a first indication field included in the DCI.

49. The terminal according to claim 48, wherein the downlink cell that is not scheduled is determined by at least one of the following conditions:
when a resource allocation mode is resource allocation mode 0 and values indicated by respective Frequency Division Resource Allocation (FDRA) fields are all 0, it is determined that there is no downlink cell scheduled;
when the resource allocation mode is resource allocation mode 1 and the values indicated by respective FDRA fields are all 1, it is determined that there is no downlink cell scheduled;
when the resource allocation mode is dynamically switched and the values indicated by respective FDRA fields are all 1 or all 0, it is determined that there is no downlink cell scheduled.

50. The terminal according to claim 46, further comprising:
a second receiving unit configured to receive one or more Physical Downlink Shared Channels (PDSCHs) from a fourth scheduled cell, wherein the fourth scheduled cell includes one or more scheduled cells other than a first downlink cell, and the first downlink cell is a downlink cell used to determine one or more slot locations of the re-transmitted HARQ-ACK codebook.

51. The terminal according to claim 50, wherein the terminal is further configured to:
when the network device instructs the terminal to perform both HARQ-ACK codebook re-transmission and PDSCH reception, determine a feedback HARQ-ACK timing for receiving the PDSCH;
wherein the feedback HARQ-ACK timing of the received PDSCH is the same as a feedback HARQ-ACK timing of the re-transmitted HARQ-ACK codebook; or
the feedback HARQ-ACK timing of the received PDSCH is different from the feedback HARQ-ACK timing of the re-transmitted HARQ-ACK codebook.

52. The terminal according to claim 51, wherein, when the feedback HARQ-ACK timing of the received PDSCH is the same as the feedback HARQ-ACK timing of the re-transmitted HARQ-ACK codebook, the feedback HARQ-ACK timing of the received PDSCH is n+k or n0+k; and/or
when the feedback HARQ-ACK timing of the received PDSCH is different from the feedback HARQ-ACK timing of the re-transmitted HARQ-ACK codebook, the feedback HARQ-ACK timing of the received PDSCH is n0+k, and the feedback HARQ-ACK timing of the re-transmitted HARQ-ACK codebook is n+k,
where n is the slot location for receiving the DCI, n0 is an uplink slot corresponding to the received PDSCH, and k is a value indicated by the timing information in the DCI.

53. The terminal according to claim 46 or 51, further comprising:
a third receiving unit configured to receive first configuration information sent by the network device, wherein the first configuration information includes at least one of the following:
first indication information, which is used to indicate whether one or more MCS indication fields included in the DCI support triggering HARQ-ACK codebook re-transmission;
second indication information, which is used to indicate whether one or more downlink cells scheduled by the DCI support performing PDSCH transmission when the HARQ-ACK codebook is re-transmitted.

54. An information processing apparatus comprising a memory, a transceiver, and a processor;
the memory is used to store a computer program; the transceiver is used to send and receive data under the control of the processor; and the processor is used to read the computer program in the memory and perform the following operations:
determining, according to one or more slot locations of a re-transmitted Hybrid Automatic Repeat reQuest - Acknowledgment (HARQ-ACK) codebook, a first Modulation and Coding Scheme (MCS) indication field;
sending Downlink Control Signaling (DCI) to a terminal, wherein the DCI schedules at least one downlink cell in a first cell group, wherein the DCI is used to schedule at least one downlink cell in the first cell group, and the DCI comprises therein at least one MCS indication field,
wherein the first MCS indication field comprises one or more MCS indication fields included in the DCI, and one MCS indication field corresponds to one downlink cell in the first cell group.

55. A network device, comprising:
a processing unit configured to determine, according to one or more slot locations of a re-transmitted Hybrid Automatic Repeat reQuest - Acknowledgment (HARQ-ACK) codebook, a first Modulation and Coding Scheme (MCS) indication field;
a first sending unit configured to send Downlink Control Signaling (DCI) to a terminal, wherein the DCI schedules at least one downlink cell in a first cell group, wherein the DCI is used to schedule at least one downlink cell in the first cell group, and the DCI comprises therein at least one MCS indication field,
wherein the first MCS indication field comprises one or more MCS indication fields included in the DCI, and one MCS indication field corresponds to one downlink cell in the first cell group.

56. A processor-readable storage medium storing therein a computer program, wherein the computer program is configured to cause a processor to execute the information processing method according to any one of claims 1 to 15, or the computer program is configured to cause the processor to execute the information processing method according to any one of claims 16 to 30.
